# FASCICULE DE BREVET EUROPEEN

(11) **EP 4 509 691 B1**
(45) Date de publication et mention de la délivrance du brevet: **29.04.2026**
(21) Numéro de dépôt: 24194245.7
(22) Date de dépôt: 13.08.2024
(51) Int. Cl.: E06B 9/72

(54) **ACTIONNEUR ÉLECTROMÉCANIQUE ET DISPOSITIF D'OCCULTATION COMPRENANT UN TEL ACTIONNEUR ÉLECTROMÉCANIQUE**
ELEKTROMECHANISCHER AKTUATOR UND VERDUNKELUNGSVORRICHTUNG MIT SOLCH EINEM ELEKTROMECHANISCHEN AKTUATOR
ELECTROMECHANICAL ACTUATOR AND CONCEALMENT DEVICE COMPRISING SUCH AN ELECTROMECHANICAL ACTUATOR

(30) Priorité: 14.08.2023 FR 2308702
(43) Date de publication de la demande: 19.02.2025
(73) Titulaire: Somfy Activites SA, 74300 Cluses (FR)
(72) Inventeur: MARCHAL, Diane, 74300 Cluses (FR); BRONDEX, Adrien, 74300 Cluses (FR); FOISSARD, Margaux, 74300 Cluses (FR)
(74) Mandataire: Lavoix

(56) Documents cités:
- EP-A1- 3 561 216
- CN-U- 202 431 792

## Description

La présente invention concerne un actionneur électromécanique d'un dispositif d'occultation, autrement dit un actionneur électromécanique pour un dispositif d'occultation.

La présente invention concerne également un dispositif d'occultation comprenant un écran entraîné en déplacement par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà le document CN 202 431 792 U qui décrit un actionneur électromécanique d'un dispositif d'occultation. L'actionneur électromécanique comprend un carter, un moteur électrique, un réducteur, un frein à ressort et un arbre de centrage. Le réducteur comprend un premier étage de réduction, un deuxième étage de réduction et un troisième étage de réduction. Le deuxième étage de réduction comprend un pignon solaire et une pluralité de pignons satellites. Le pignon solaire comprend un alésage. Le moteur électrique, le réducteur et le frein à ressort sont montés à l'intérieur du carter. Le frein à ressort comprend un ressort hélicoïdal, un tambour, un organe d'entrée et un organe de sortie. Le tambour comprend une surface de frottement. La surface de frottement est configurée pour coopérer avec au moins une spire du ressort hélicoïdal. L'organe d'entrée comprend un alésage. L'organe de sortie comprend un alésage. En outre, l'arbre de centrage est monté à l'intérieur de l'alésage de l'organe d'entrée, de l'alésage de l'organe de sortie et de l'alésage du pignon solaire.

Par ailleurs, dans ce document CN 202 431 792 U, l'organe de sortie du frein à ressort et le pignon solaire du deuxième étage de réduction ne forment qu'une seule pièce, de sorte que l'alésage de l'organe de sortie et l'alésage du pignon solaire du deuxième étage de réduction sont communs et ne forment qu'un seul alésage.

Cependant, cet actionneur électromécanique présente l'inconvénient que, lors de l'assemblage du réducteur avec le frein à ressort, l'organe de sortie n'est pas centré par rapport à l'organe d'entrée à l'intérieur du frein à ressort, tant que l'arbre de centrage n'est pas inséré dans l'alésage de l'organe d'entrée, dans l'alésage de l'organe de sortie et dans l'alésage du pignon solaire du deuxième étage de réduction.

En outre, l'emmanchement en force de l'arbre de centrage dans l'alésage du pignon solaire du deuxième étage de réduction et dans l'alésage de l'organe d'entrée du frein à ressort contraint le fonctionnement du frein à ressort, ce qui risque d'engendrer un bruit de fonctionnement de celui-ci et/ou de dégrader son rendement.

La présente invention a pour but de résoudre les inconvénients précités et de proposer un actionneur électromécanique d'un dispositif d'occultation, ainsi qu'un dispositif d'occultation comprenant un tel actionneur électromécanique, comprenant un réducteur et un frein à ressort où, lors de l'assemblage du réducteur avec le frein à ressort, un organe de sortie du frein à ressort est centré à l'intérieur du frein à ressort, même lorsqu'un arbre de centrage de l'actionneur électromécanique n'est pas inséré dans un premier alésage d'un organe d'entrée du frein à ressort, dans un premier alésage de l'organe de sortie et dans un alésage d'un pignon solaire d'un étage de réduction du réducteur.

A cet égard, la présente invention vise, selon un premier aspect, un actionneur électromécanique d'un dispositif d'occultation,
l'actionneur électromécanique comprenant au moins :
   - un carter,
   - un moteur électrique,
   - un réducteur, le réducteur comprenant au moins un étage de réduction, l'étage de réduction comprenant un pignon solaire et une pluralité de pignons satellites, le pignon solaire comprenant au moins un alésage,
   - un frein à ressort, et
   - un arbre de centrage,
le moteur électrique, le réducteur et le frein à ressort étant montés à l'intérieur du carter,
le frein à ressort comprenant au moins :
   - un ressort hélicoïdal,
   - un tambour, le tambour comprenant une surface de frottement, la surface de frottement étant configurée pour coopérer avec au moins une spire du ressort hélicoïdal,
   - un organe d'entrée, l'organe d'entrée comprenant au moins un premier alésage, et
   - un organe de sortie, l'organe de sortie comprenant un premier alésage,
l'arbre de centrage étant monté à l'intérieur du premier alésage de l'organe de sortie et de l'alésage du pignon solaire.

Selon l'invention, l'organe de sortie comprend au moins un deuxième alésage. Le frein à ressort comprend, en outre, un coussinet, le coussinet comprenant au moins un alésage, l'arbre de centrage étant monté à l'intérieur de l'alésage du coussinet. Le coussinet est monté à l'intérieur du premier alésage de l'organe d'entrée avec un ajustement serré. En outre, le coussinet est monté à l'intérieur du deuxième alésage de l'organe de sortie avec un ajustement libre.

Ainsi, cette construction de l'actionneur électromécanique, où le frein à ressort est équipé du coussinet monté à l'intérieur du premier alésage de l'organe d'entrée et à l'intérieur du deuxième alésage de l'organe de sortie, permet, lors de l'assemblage du réducteur avec le frein à ressort, de centrer l'organe de sortie par rapport à l'organe d'entrée à l'intérieur du frein à ressort, même lorsque l'arbre de centrage n'est pas inséré dans le premier alésage de l'organe d'entrée, dans l'alésage du coussinet, dans le premier alésage de l'organe de sortie et dans l'alésage du pignon solaire de l'étage de réduction du réducteur.

En outre, le coussinet permet de garantir un centrage précis de l'arbre de centrage à l'intérieur du frein à ressort et de l'étage de réduction.

Selon une caractéristique avantageuse de l'invention, le tambour comprend un logement, le logement étant de forme cylindrique. La surface de frottement est une surface interne du tambour délimitant radialement le logement. En outre, la surface de frottement du tambour présente un diamètre inférieur ou égal à quarante-cinq millimètres.

Selon une autre caractéristique avantageuse de l'invention, l'étage de réduction comprend, en outre, un porte satellites, le porte-satellites comprenant au moins un alésage. Le réducteur comprend, en outre, un autre étage de réduction, l'autre étage de réduction comprenant un autre pignon solaire, une pluralité d'autres pignons satellites et un autre porte-satellites, l'autre pignon solaire comprenant au moins un alésage, l'autre porte-satellites comprenant au moins un alésage. En outre, l'arbre de centrage est monté à l'intérieur de l'alésage du porte-satellites de l'étage de réduction, de l'alésage de l'autre pignon solaire de l'autre étage de réduction et de l'alésage de l'autre porte-satellites de l'autre étage de réduction.

Selon une autre caractéristique avantageuse de l'invention, l'organe d'entrée comprend, en outre, un deuxième alésage. L'arbre de centrage est monté avec un ajustement libre à l'intérieur du deuxième alésage de l'organe d'entrée. L'arbre de centrage est monté avec un ajustement serré à l'intérieur de l'alésage de l'autre porte-satellites de l'autre étage de réduction. En outre, l'arbre de centrage est monté avec un ajustement libre à l'intérieur du premier alésage de l'organe de sortie.

Selon une autre caractéristique avantageuse de l'invention, le porte-satellites de l'étage de réduction comprend une interface d'accouplement. L'organe de sortie comprend une interface d'accouplement. L'interface d'accouplement du porte-satellites de l'étage de réduction et l'interface d'accouplement de l'organe de sortie sont identiques. Le pignon solaire de l'étage de réduction comprend une première denture. L'autre pignon solaire de l'autre étage de réduction comprend une première denture. En outre, la première denture du pignon solaire de l'étage de réduction et la première denture de l'autre pignon solaire de l'autre étage de réduction sont identiques.

Selon une autre caractéristique avantageuse de l'invention, le tambour comprend un épaulement. En outre, le porte-satellites de l'étage de réduction est configuré pour être en appui contre l'épaulement du tambour.

Selon une autre caractéristique avantageuse de l'invention, le frein à ressort comprend, en outre, un capot. En outre, l'épaulement du tambour constitue une butée axiale du porte-satellites de l'étage de réduction par rapport au tambour, en garantissant un jeu de fonctionnement entre le capot et le porte-satellites de l'étage de réduction.

Selon une autre caractéristique avantageuse de l'invention, le tambour est réalisé en acier ou dans une matière plastique.

Selon une autre caractéristique avantageuse de l'invention, le porte-satellites de l'étage de réduction est réalisé en matière plastique.

La présente invention vise, selon un deuxième aspect, un dispositif d'occultation, le dispositif d'occultation comprenant au moins :
- un écran, et
- un actionneur électromécanique conforme à l'invention et tel que mentionné ci-dessus, l'écran étant entraîné en déplacement par l'actionneur électromécanique.

Ce dispositif d'occultation présente des caractéristiques et avantages analogues à ceux décrits précédemment, en relation avec l'actionneur électromécanique selon l'invention.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation comprenant un dispositif d'occultation conforme à un mode de réalisation de l'invention ;
[Fig 2] la figure 2 est une vue schématique en perspective de l'installation illustrée à la figure 1 ;
[Fig 3] la figure 3 est une vue schématique en perspective d'un dispositif d'entraînement motorisé de l'installation illustrée aux figures 1 et 2, ce dispositif d'entraînement motorisé comprenant un actionneur électromécanique conforme à l'invention et un tube d'enroulement ;
[Fig 4] la figure 4 est une vue schématique en coupe de l'actionneur électromécanique illustré à la figure 3, selon un plan de coupe passant par un axe de rotation de l'actionneur électromécanique, cette vue schématique en coupe étant interrompue localement au niveau de deux parties de l'actionneur électromécanique ;
[Fig 5] la figure 5 est une vue schématique en perspective et éclatée d'une partie de l'actionneur électromécanique illustré à la figure 4 ;
[Fig 6] la figure 6 est une vue schématique éclatée et en perspective d'un frein à ressort de l'actionneur électromécanique illustré aux figures 3 à 5 ;
[Fig 7] la figure 7 est une première vue schématique en coupe du frein à ressort illustré à la figure 6 selon un plan de coupe passant par l'axe de rotation de l'actionneur électromécanique illustré aux figures 3 à 5 ;
[Fig 8] la figure 8 est une deuxième vue schématique en coupe du frein à ressort illustré aux figures 6 et 7 selon un plan de coupe perpendiculaire à l'axe de rotation de l'actionneur électromécanique illustré aux figures 3 à 5 ; et
[Fig 9] la figure 9 est une vue schématique en coupe, de détail et à plus grande échelle, correspondant à l'encadré IX, d'une partie de l'actionneur électromécanique illustré à la figure 4.

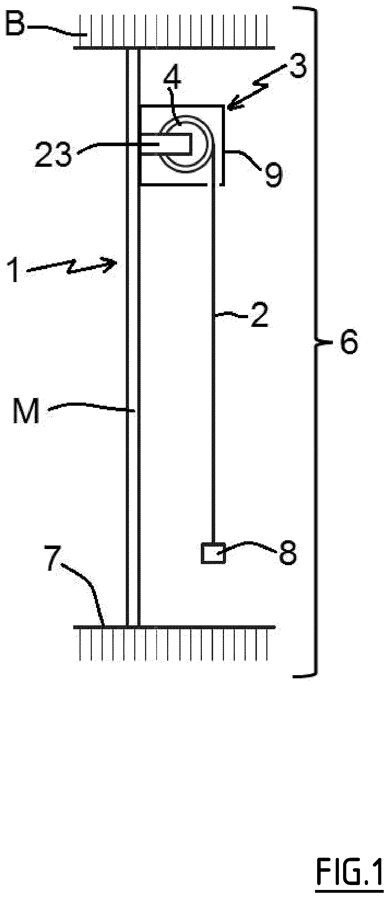

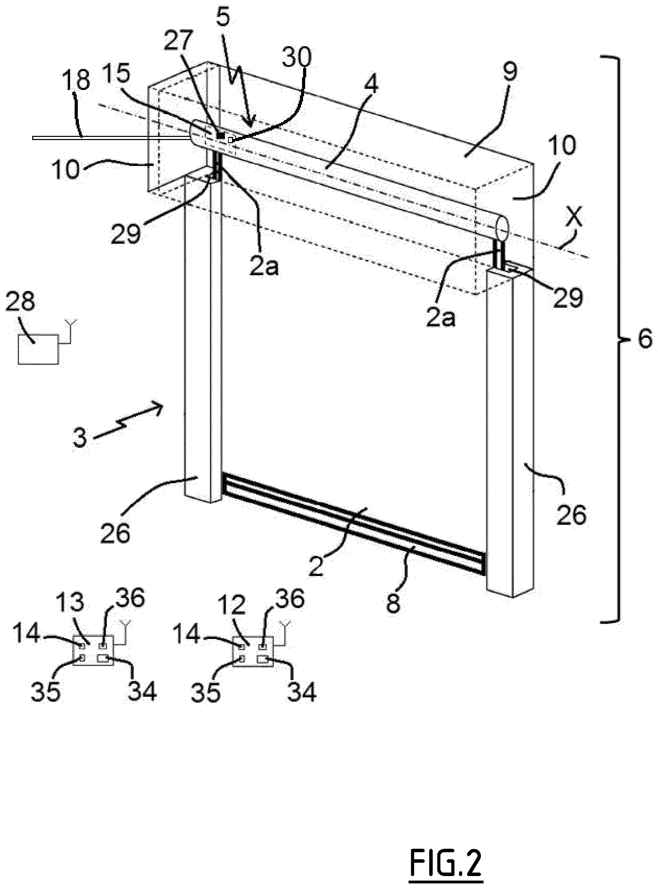

On décrit tout d'abord, en référence aux figures 1 et 2, une installation 6 comprenant un dispositif de fermeture, d'occultation ou de protection solaire 3 conforme à un mode de réalisation de l'invention. Cette installation 6, installée dans un bâtiment B, comporte une ouverture 1, dans laquelle est disposée une fenêtre ou une porte, non représentée. Cette installation 6 est équipée d'un écran 2 appartenant au dispositif de fermeture, d'occultation ou de protection solaire 3, en particulier un store motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un store, notamment un store comprenant une toile enroulable, un store comprenant un écran plissé ou alvéolé ou un store avec des lames orientables, ou un volet roulant. La présente invention s'applique à tous les types de dispositif d'occultation.

Ici, l'installation 6 comprend le dispositif d'occultation 3.

On décrit, en référence aux figures 1 et 2, un store enroulable conforme à un mode de réalisation de l'invention.

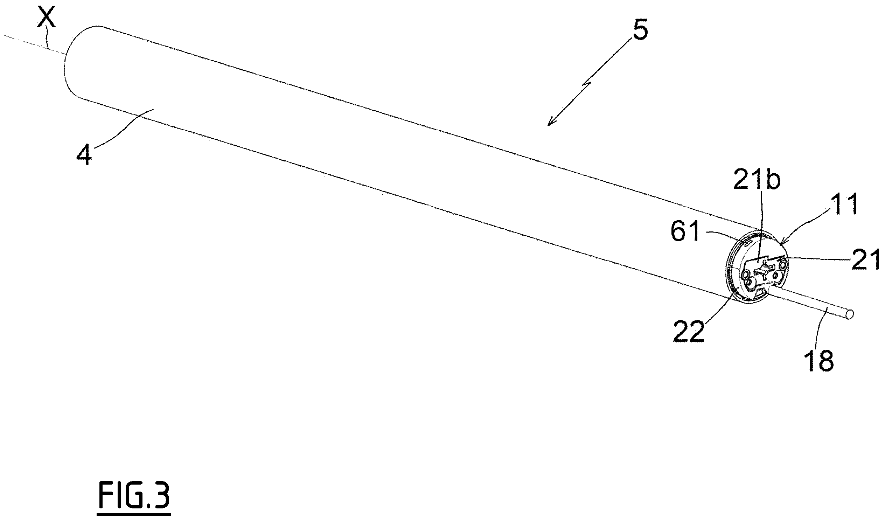

Le dispositif d'occultation 3 comprend un dispositif d'entraînement motorisé 5. Le dispositif d'entraînement motorisé 5 comprend un actionneur électromécanique 11 illustré aux figures 3 à 5.

L'écran 2 est configuré pour être déplacé, autrement dit est déplacé, au moyen du dispositif d'entraînement motorisé 5 et, plus particulièrement, de l'actionneur électromécanique 11.

Avantageusement, le dispositif d'entraînement motorisé 5 et, par conséquent, le dispositif d'occultation 3 comprend, en outre, un tube d'enroulement 4. En outre, le tube d'enroulement 4 est agencé de sorte à être entraîné en rotation par l'actionneur électromécanique 11.

Ici, l'écran 2 est enroulable sur le tube d'enroulement 4.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Avantageusement, le dispositif d'occultation 3 comprend un dispositif de maintien 9, 23.

Avantageusement, le dispositif de maintien 9, 23 peut comprendre deux supports 23. Un support 23 est disposé à chaque extrémité du tube d'enroulement 4, en particulier dans une configuration assemblée du dispositif d'occultation 3.

Ainsi, le tube d'enroulement 4 est maintenu par l'intermédiaire des supports 23. Un seul des supports 23 est visible à la figure 1 et ceux-ci ne sont pas représentés à la figure 2. Les supports 23 permettent de lier mécaniquement le dispositif d'occultation 3 à la structure du bâtiment B, notamment à un mur M du bâtiment B.

Avantageusement, le dispositif de maintien 9, 23 peut comprendre un caisson 9. En outre, le tube d'enroulement 4 et au moins une partie de l'écran 2 sont logés à l'intérieur du caisson 9, en particulier dans la configuration assemblée du dispositif d'occultation 3.

De manière générale, le caisson 9 est disposé au-dessus de l'ouverture 1, ou encore en partie supérieure de l'ouverture 1.

Ici et comme illustré à la figure 1, les supports 23 sont également logés à l'intérieur du caisson 9.

Avantageusement, le caisson 9 comprend deux joues 10, telles qu'illustrées à la figure 2. Une joue 10 est disposée à chaque extrémité du caisson 9, en particulier dans la configuration assemblée du dispositif d'occultation 3.

En variante, représentée à la figure 2, le tube d'enroulement 4 est maintenu par l'intermédiaire du caisson 9, en particulier par l'intermédiaire des joues 10 du caisson 9, sans utiliser des supports, tels que les supports 23 mentionnés ci-dessus.

Avantageusement, le dispositif d'occultation 3 peut également comprendre deux coulisses latérales 26, comme illustré uniquement à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, en particulier dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est, par exemple, de type tubulaire. Celui-ci permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Avantageusement, le dispositif d'occultation 3 comprend, en outre, une barre de charge 8 pour exercer une tension sur l'écran 2.

Le store enroulable, qui forme le dispositif d'occultation 3, comporte une toile, formant l'écran 2 du store enroulable 3. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

Ici, la toile formant l'écran 2 est réalisée à partir d'un matériau textile.

Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à solidariser l'écran 2 avec le tube d'enroulement 4 et à pouvoir enrouler et dérouler l'écran 2 autour du tube d'enroulement 4.

Quel que soit le mode de réalisation, la première extrémité de l'écran 2 est disposée au niveau du dispositif de maintien 9, 23.

Dans le cas d'un store enroulable, la position haute enroulée correspond à une position de fin de course haute prédéterminée, ou encore à la mise en appui de la barre de charge 8 de l'écran 2 contre un bord du caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment B.

Le dispositif d'entraînement motorisé 5 est, de préférence, configuré pour exécuter les commandes de déplacement, notamment de déroulement ou d'enroulement, de l'écran 2 du dispositif d'occultation 3, pouvant être émises, notamment, par l'unité de commande locale 12 ou l'unité de commande centrale 13.

L'installation 6 comprend soit l'unité de commande locale 12, soit l'unité de commande centrale 13, soit l'unité de commande locale 12 et l'unité de commande centrale 13.

On décrit à présent, plus en détail et en référence aux figures 3 à 5, le dispositif d'entraînement motorisé 5, y compris l'actionneur électromécanique 11, appartenant à l'installation 6 et, plus particulièrement, au dispositif d'occultation 3 illustré aux figures 1 et 2.

L'actionneur électromécanique 11 comprend un carter 17, en particulier tubulaire, un moteur électrique 16 et un réducteur 19.

Ici, le moteur électrique 16 et le réducteur 19 sont logés, autrement dit sont montés, à l'intérieur du carter 17, en particulier dans une configuration assemblée de l'actionneur électromécanique 11.

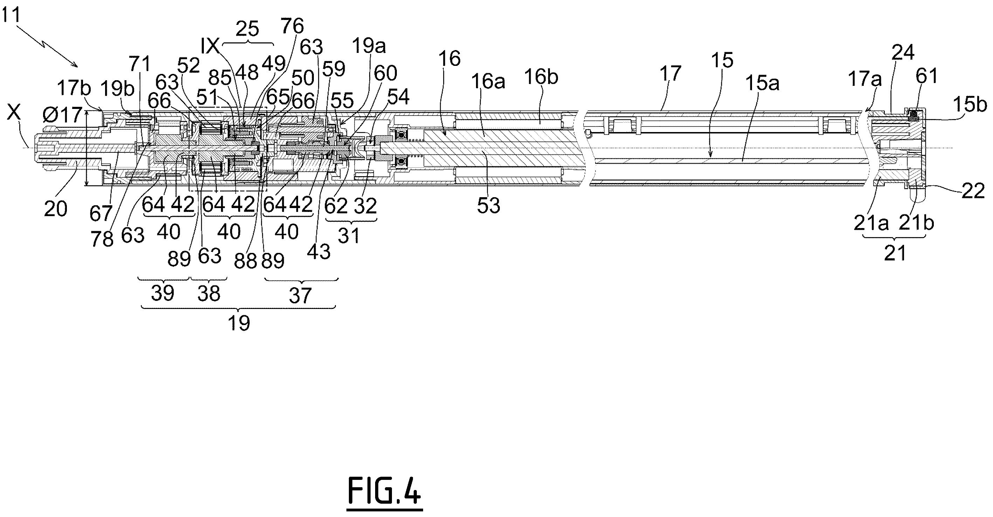

Avantageusement, le moteur électrique 16 comprend un rotor 16a et un stator 16b, comme illustré à la figure 4.

Ici, le rotor 16a et le stator 16b sont positionnés de manière coaxiale autour de l'axe de rotation X, qui est également l'axe de rotation du tube d'enroulement 4 en configuration montée du dispositif d'entraînement motorisé 5.

Avantageusement, le moteur électrique 16 peut être de type sans balais à commutation électronique, appelé également « BLDC » (acronyme du terme anglo-saxon BrushLess Direct Current) ou « synchrone à aimants permanents », de type à courant continu ou de type asynchrone.

Avantageusement, le rotor 16a du moteur électrique 16 comprend un arbre 53.

Ici, le carter 17 est creux. Le carter 17 comprend une première extrémité 17a et une deuxième extrémité 17b. La deuxième extrémité 17b est opposée à la première extrémité 17a.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Ici, le carter 17 est réalisé dans un matériau métallique.

La matière du carter de l'actionneur électromécanique n'est pas limitative et peut être différente. Il peut s'agir, en particulier, d'une matière plastique.

Des moyens de commande de l'actionneur électromécanique 11, permettant le déplacement de l'écran 2 du dispositif d'occultation 3, sont constitués par au moins une unité de contrôle 15, en particulier une unité électronique de contrôle.

Cette unité de contrôle 15 appartient au dispositif d'entraînement motorisé 5 et, plus particulièrement, à l'actionneur électromécanique 11 et est apte à mettre en fonctionnement le moteur électrique 16 de l'actionneur électromécanique 11 et, en particulier, à permettre l'alimentation en énergie électrique du moteur électrique 16.

Ainsi, l'unité de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 30, comme illustré à la figure 2.

Avantageusement, l'unité de contrôle 15 comprend, en outre, un premier module de communication 27, comme illustré à la figure 2, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité de contrôle 15, l'unité de commande locale 12 et/ou l'unité de commande centrale 13 peuvent être en communication avec une station météorologique disposée à l'intérieur du bâtiment B ou déportée à l'extérieur du bâtiment B, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment B.

Avantageusement, l'unité de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent être des boutons poussoirs et/ou des touches sensitives. Les éléments d'affichage peuvent être des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, et/ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité de contrôle 15.

Ainsi, le deuxième module de communication 36 de l'unité de commande locale 12 ou de l'unité de commande centrale 13 échange des ordres de commande avec le premier module de communication 27 de l'unité de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade du mur M du bâtiment B ou sur une face d'un cadre dormant d'une fenêtre ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Le dispositif d'entraînement motorisé 5 peut également être contrôlé automatiquement, par exemple par la réception d'un ordre de commande correspondant à au moins un signal provenant d'au moins un capteur, non représenté, et/ou à un signal provenant d'une horloge, non représentée, de l'unité de contrôle 15, en particulier du microcontrôleur 30. Le capteur et/ou l'horloge peuvent être intégrés, en variante, à l'unité de commande locale 12 ou à l'unité de commande centrale 13.

Avantageusement, l'actionneur électromécanique 11 comprend, en outre, une couronne 24, pouvant également être appelée manchon, comme illustrée à la figure 4.

La couronne 24 est disposée, autrement dit est configurée pour être disposée, au voisinage de la première extrémité 17a du carter 17, en particulier dans la configuration assemblée de l'actionneur électromécanique 11.

Avantageusement, le dispositif d'entraînement motorisé 5 et, plus particulièrement, l'actionneur électromécanique 11 comprend, en outre, un câble d'alimentation électrique 18, comme illustré à la figure 2.

Avantageusement, l'unité de contrôle 15 peut être alimentée en énergie électrique au moyen du câble d'alimentation électrique 18 connecté électriquement à au moins une source d'alimentation en énergie électrique, non représentée, pouvant être, par exemple, un réseau d'alimentation en énergie électrique, notamment du secteur ou dit « PoE » (acronyme du terme anglo-saxon Power over Ethernet), et/ou à une batterie, qui peut être rechargeable, notamment au moyen d'un panneau photovoltaïque et/ou d'un chargeur, non représenté, ou au travers du réseau d'alimentation en énergie électrique.

Ainsi, le câble d'alimentation électrique 18 permet une alimentation en énergie électrique de l'actionneur électromécanique 11, en particulier de l'unité de contrôle 15 et du moteur électrique 16, à partir de la ou des source(s) d'alimentation en énergie électrique.

Avantageusement, l'actionneur électromécanique 11 comprend, en outre, un arbre de sortie 20. En outre, l'arbre de sortie 20 de l'actionneur électromécanique 11 est disposé, autrement dit est configuré pour être disposé, au voisinage de la deuxième extrémité 17b du carter 17, en particulier dans la configuration assemblée de l'actionneur électromécanique 11.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 de l'actionneur électromécanique 11 est en saillie par rapport au carter 17 de l'actionneur électromécanique 11, en particulier par rapport à la deuxième extrémité 17b du carter 17 opposée à la première extrémité 17a.

Avantageusement, l'arbre de sortie 20 de l'actionneur électromécanique 11 est configuré pour entraîner en rotation un élément de liaison, non représenté, relié au tube d'enroulement 4. L'élément de liaison est, par exemple, réalisé sous la forme d'une roue.

Lors de la mise en fonctionnement de l'actionneur électromécanique 11, le moteur électrique 16 et le réducteur 19 entraînent en rotation l'arbre de sortie 20 de l'actionneur électromécanique 11. En outre, l'arbre de sortie 20 de l'actionneur électromécanique 11 entraîne en rotation le tube d'enroulement 4 par l'intermédiaire de l'élément de liaison.

Ainsi, le tube d'enroulement 4 entraîne en rotation l'écran 2 du dispositif d'occultation 3, de sorte à ouvrir ou fermer l'ouverture 1.

L'actionneur électromécanique 11 comprend, en outre, un frein à ressort 25.

Le frein à ressort 25 est configuré pour freiner et/ou pour bloquer en rotation l'arbre de sortie 20 de l'actionneur électromécanique 11, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Le frein à ressort 25 est logé, autrement dit est monté, à l'intérieur du carter 17 de l'actionneur électromécanique 11, en particulier dans la configuration assemblée de l'actionneur électromécanique 11.

Le réducteur 19 comprend au moins un étage de réduction 37, 38, 39. L'étage de réduction 37, 38, 39, l'un des étages de réduction 37, 38, 39 ou chaque étage de réduction 37, 38, 39 est de type épicycloïdal.

Ici et comme illustré à la figure 4, le réducteur 19 comprend trois étages de réduction 37, 38, 39. Chacun des trois étages de réduction 37, 38, 39 est de type épicycloïdal. Les trois étages de réduction 37, 38, 39 sont appelés par la suite premier étage de réduction 37, deuxième étage de réduction 38 et troisième étage de réduction 39.

Le nombre d'étages de réduction du réducteur n'est pas limitatif. Le nombre d'étages de réduction peut être de un, de deux ou supérieur ou égal à quatre.

Ici et comme illustré à la figure 4, le frein à ressort 25 est configuré pour être disposé, autrement dit est disposé, entre deux étages de réduction 37, 38, 39, en particulier entre le premier étage de réduction 37 et le deuxième étage de réduction 38 du réducteur 19, en particulier dans la configuration assemblée de l'actionneur électromécanique 11.

Avantageusement, le réducteur 19 comprend une première extrémité 19a et une deuxième extrémité 19b. La deuxième extrémité 19b est opposée à la première extrémité 19a. La première extrémité 19a du réducteur 19 est disposée en face du moteur électrique 16, autrement dit fait face au moteur électrique 16, en particulier dans la configuration assemblée de l'actionneur électromécanique 11. En outre, la deuxième extrémité 19b du réducteur 19 est disposée en face de l'arbre de sortie 20 de l'actionneur électromécanique 11, autrement dit fait face à l'arbre de sortie 20 de l'actionneur électromécanique 11, en particulier dans la configuration assemblée de l'actionneur électromécanique 11

Ici, le premier étage de réduction 37 est disposé au niveau de la première extrémité 19a du réducteur 19. Le troisième étage de réduction 39 est disposé au niveau de la deuxième extrémité 19b du réducteur 19. En outre, le deuxième étage de réduction 38 est disposé entre le premier étage de réduction 37 et le troisième étage de réduction 39 et, plus particulièrement entre le frein à ressort 25 et le troisième étage de réduction 39.

L'un ou chacun des premier, deuxième et troisième étages de réduction 37, 38, 39 comprend un pignon solaire 40 et une pluralité de pignons satellites 63, pouvant être, par exemple, au nombre de trois.

Le pignon solaire 40 et les pignons satellites 63 du premier étage de réduction 37 peuvent être appelés premier pignon solaire et premiers pignons satellites. Le pignon solaire et les pignons satellites du deuxième étage de réduction 38 peuvent être appelés deuxième pignon solaire et deuxièmes pignons satellites. En outre, le pignon solaire et les pignons satellites du troisième étage de réduction 39 peuvent être appelés troisième pignon solaire et troisièmes pignons satellites.

On note X19 un axe de rotation du réducteur 19.

On note X40 un axe de rotation du ou de chaque pignon solaire 40.

L'axe de rotation X40 du ou de chaque pignon solaire 40 est confondu avec l'axe de rotation X19 du réducteur 19. Par conséquent, l'axe de rotation X40 et l'axe de rotation X19 sont représentés par un même trait d'axe sur les figures.

Avantageusement, les pignons satellites 63 du ou de chacun des premier, deuxième et troisième étages de réduction 37, 38, 39 sont régulièrement répartis, autour de l'axe de rotation X19.

Le nombre de pignons satellites des premier, deuxième et troisième étages de réduction n'est pas limitatif et peut être différent. Le nombre de pignons satellites d'un étage de réduction peut être de deux ou plus.

Avantageusement, le pignon solaire 40 du ou de chaque étage de réduction 37, 38, 39 comprend une première partie de pignon solaire et une deuxième partie de pignon solaire. La première partie de pignon solaire comprend une première denture 42. En outre, la deuxième partie de pignon solaire comprend une deuxième denture 64.

Avantageusement, pour l'un ou chacun des étages de réduction 37, 38, 39, la deuxième denture 64 de la deuxième partie du pignon solaire 40 est décalée angulairement d'un demi pas par rapport à la première denture 42 de la première partie du pignon solaire 40, autour de l'axe de rotation X40 de ce pignon solaire 40.

En variante, non représentée, pour l'un ou chacun des étages de réduction 37, 38, 39, la deuxième denture 64 de la deuxième partie du pignon solaire 40 est calée angulairement, autrement dit ne présente pas de décalage angulaire, par rapport à la première denture 42 de la première partie du pignon solaire 40, autour de l'axe de rotation X40 de ce pignon solaire 40.

Avantageusement, dans chacun des premier, deuxième et troisième étages de réduction 37, 38, 39, le pignon solaire 40 est engrené, autrement dit est configuré pour être engrené, avec chaque pignon satellite 63 de cet étage de réduction 37, 38, 39, en particulier dans une configuration assemblée du réducteur 19.

Avantageusement, dans chacun des premier, deuxième et troisième étages de réduction 37, 38, 39, les pignons satellites 63 sont identiques, au moins par groupes de pignons satellites d'un étage de réduction 37, 38, 39.

Avantageusement, dans chacun des premier, deuxième et troisième étages de réduction 37, 38, 39, les pignons satellites 63 sont excentrés par rapport à l'axe de rotation X19 du réducteur 19 et, plus particulièrement, par rapport au pignon solaire 40 de cet étage de réduction 37, 38, 39, en particulier dans la configuration assemblée du réducteur 19.

Ainsi, pour un étage de réduction 37, 38, 39 donné, un axe de rotation de chaque pignon satellite 63 est parallèle à, et radialement décalé de, l'axe de rotation X19 du réducteur 19 et, plus particulièrement, parallèle à, et radialement décalé de, l'axe de rotation X40 du pignon solaire 40.

Avantageusement, le réducteur 19 comprend, en outre, un arbre d'entrée 43.

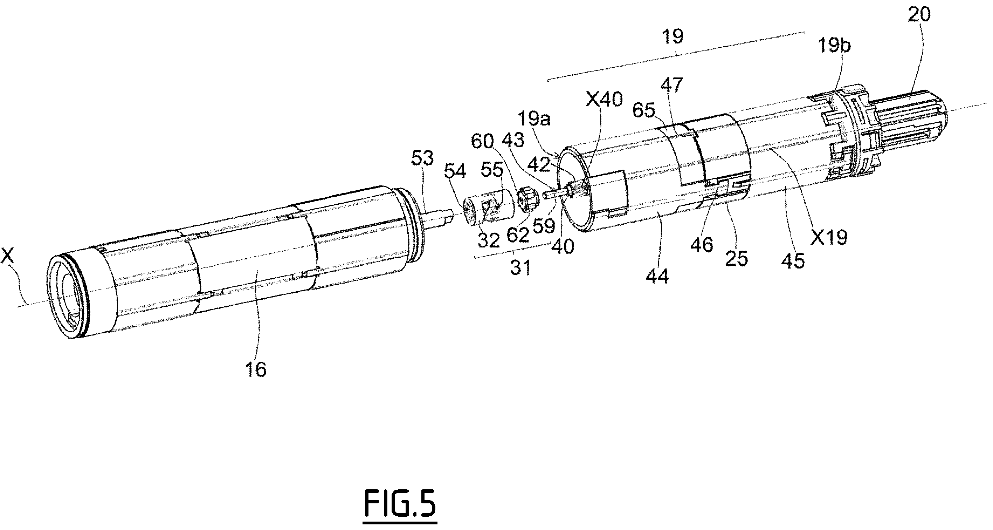

Ici et comme illustré aux figures 4 et 5, un arbre 59 du pignon solaire 40 du premier étage de réduction 37 constitue l'arbre d'entrée 43 du réducteur 19.

En variante, non représentée, le pignon solaire 40 du premier étage de réduction 37 est porté par l'arbre d'entrée 43 du réducteur 19.

Ainsi, quel que soit l'exemple de réalisation, le pignon solaire 40 du premier étage de réduction 37 est solidaire de l'arbre d'entrée 43 du réducteur 19.

Avantageusement, le réducteur 19 comprend, en outre, un arbre de sortie 67.

Ici, l'arbre de sortie 67 du réducteur 19 est disposé, autrement dit est configuré pour être disposé, à l'intérieur de l'arbre de sortie 20 de l'actionneur électromécanique 11, en particulier dans la configuration assemblée de l'actionneur électromécanique 11.

En variante, non représentée, l'arbre de sortie 20 de l'actionneur électromécanique 11 constitue l'arbre de sortie 67 du réducteur 19.

Avantageusement, l'arbre d'entrée 43 et l'arbre de sortie 67 du réducteur 19 sont coaxiaux, autrement dit sont configurés pour être coaxiaux, en particulier dans la configuration assemblée du réducteur 19.

Ainsi, l'arbre d'entrée 43 et l'arbre de sortie 67 du réducteur 19 sont disposés suivant le même axe de rotation X19, qui est également l'axe de rotation du réducteur 19, en particulier dans la configuration assemblée du réducteur 19.

Avantageusement, le réducteur 19 comprend, en outre, au moins une couronne 65. La ou chacune des couronnes 65 comprend une denture interne.

Ici, le réducteur 19 comprend deux couronnes 65. L'une des deux couronnes 65 est formée par le regroupement d'une deuxième couronne du deuxième étage de réduction 38 avec une troisième couronne du troisième étage de réduction 39. Cette couronne 65 n'est pas représentée sur les figures 4, 5 et 9. Dans ce cas, les pignons satellites 63 des deuxième et troisième étages de réduction 38, 39 sont engrenés, autrement dit sont configurés pour être engrenés, avec la même couronne 65, en particulier dans la configuration assemblée du réducteur 19. Dans ce cas, cette unique couronne 65 appartient aux deuxième et troisième étages de réduction 38, 39. En outre, dans ce cas, l'autre des deux couronnes 65, représentée aux figures 4 et 5, est formée par la première couronne du premier étage de réduction 37.

Avantageusement, la première couronne du premier étage de réduction 37 est réalisée soit en acier soit en matière plastique.

A titre d'exemple nullement limitatif, l'acier de la première couronne du premier étage de réduction 37 est de l'acier fritté.

A titre d'exemple nullement limitatif, la matière plastique de la première couronne du premier étage de réduction 37 est du poly-butylène téréphtalate, également appelé PBT, ou du poly-acétal, également appelé POM.

En variante, non représentée, l'une des deux couronnes 65 est formée par le regroupement d'une première couronne du premier étage de réduction 37 avec une deuxième couronne du deuxième étage de réduction 38. Dans ce cas, les pignons satellites 63 des premier et deuxième étages de réduction 37, 38 sont engrenés, autrement dit sont configurés pour être engrenés, avec la même couronne 65, en particulier dans la configuration assemblée du réducteur 19. Dans ce cas, cette unique couronne 65 appartient aux premier et deuxième étages de réduction 37, 38. En outre, dans ce cas, l'autre des deux couronnes 65 est formée par une troisième couronne du troisième étage de réduction 39.

En variante, non représentée, le réducteur 19 comprend trois couronnes 65. Les trois couronnes 65 peuvent être appelées première couronne, deuxième couronne et troisième couronne. Chaque pignon satellite 63 de chacun des premier, deuxième et troisième étages de réduction 37, 38, 39 est engrené, autrement dit est configuré pour être engrené, avec la couronne 65, en particulier avec la denture interne de la couronne 65, de cet étage de réduction 37, 38, 39, en particulier dans la configuration assemblée du réducteur 19. Dans ce cas, les première, deuxième et troisième couronnes 65 appartiennent respectivement à l'un des premier, deuxième et troisième étages de réduction 37, 38, 39.

Dans une autre variante, non représentée, le réducteur 19 comprend une unique couronne 65. Dans ce cas, les pignons satellites 63 de chacun des premier, deuxième et troisième étages de réduction 37, 38, 39 sont engrenés, autrement dit sont configurés pour être engrenés, avec l'unique couronne 65, en particulier avec la denture interne de l'unique couronne 65, en particulier dans la configuration assemblée du réducteur 19. Dans ce cas, cette unique couronne 65 appartient aux premier, deuxième et troisième étages de réduction 37, 38, 39.

Avantageusement, chacun des premier, deuxième et troisième étages de réduction 37, 38, 39 comprend, en outre, un porte-satellites 66.

Avantageusement, le porte-satellites 66 du deuxième étage de réduction 38 comprend une interface d'accouplement 89. En outre, l'interface d'accouplement 89 du porte-satellites 66 du deuxième étage de réduction 38 coopère, autrement dit est configurée pour coopérer, avec le pignon solaire 40 du troisième étage de réduction 39, en particulier dans la configuration assemblée de l'actionneur électromécanique 11.

Ici, l'interface d'accouplement 89 du porte-satellites 66 du deuxième étage de réduction 38 est une denture interne. En outre, en particulier dans la configuration assemblée de l'actionneur électromécanique 11, l'interface d'accouplement 89 du porte-satellites 66 du deuxième étage de réduction 38 s'engrène, autrement dit est configurée pour s'engrener, avec le pignon solaire 40 du troisième étage de réduction 39, notamment avec la première denture 42 du pignon solaire 40 du troisième étage de réduction 39.

Ainsi, l'interface d'accouplement 89 du porte-satellites 66 du deuxième étage de réduction 38 permet de recevoir et de transmettre un couple provenant du moteur électrique 16 et, en l'occurrence, du deuxième étage de réduction 38 au troisième étage de réduction 39.

Avantageusement, le porte-satellites 66 du deuxième étage de réduction 38 est réalisé en matière plastique.

A titre d'exemple nullement limitatif, la matière plastique du porte-satellites 66 du deuxième étage de réduction 38 est du poly-butylène téréphtalate, également appelé PBT, ou du poly-acétal, également appelé POM.

Avantageusement, le porte-satellites 66 du troisième étage de réduction 39 est solidaire de l'arbre de sortie 67 du réducteur 19.

Ainsi, l'arbre de sortie 67 du réducteur 19 est entraîné en rotation, en particulier par l'intermédiaire du porte-satellites 66 du troisième étage de réduction 39, lorsque l'arbre d'entrée 43 du réducteur 19 est entraîné en rotation, notamment lors d'une activation électrique du moteur électrique 16 provoquant l'entraînement en rotation du rotor 16a.

Dans un exemple de réalisation, le porte-satellites 66 du troisième étage de réduction 39 et l'arbre de sortie 67 du réducteur 19 forment deux pièces distinctes. Dans ce cas, dans la configuration assemblée du réducteur 19, les deux pièces sont reliées, autrement dit sont configurées pour être reliées, ensemble au moyen d'éléments de fixation, pouvant être démontables. A titre d'exemples nullement limitatifs, les éléments de fixation peuvent être du type par encliquetage élastique ou par vissage.

En variante, non représentée, le porte-satellites 66 du troisième étage de réduction 39 et l'arbre de sortie 67 du réducteur 19 forment une unique pièce, pouvant être réalisée, par exemple, par frittage. Cette pièce peut être réalisée, notamment, dans une matière plastique ou dans une matière métallique.

Avantageusement, le réducteur 19 comprend un premier couvercle 44 et un deuxième couvercle 45. Le premier couvercle 44 est disposé au niveau de la première extrémité 19a du réducteur 19. En outre, le deuxième couvercle 45 est disposé au niveau de la deuxième extrémité 19b du réducteur 19.

Dans un exemple de réalisation, le premier couvercle 44 et la couronne 65 du premier étage de réduction 37 forment deux pièces distinctes. En outre, le deuxième couvercle 45 et la couronne 65 du troisième étage de réduction 39 forment deux pièces distinctes. Dans ce cas, dans la configuration assemblée du réducteur 19, les deux pièces sont reliées, autrement dit sont configurées pour être reliées ensemble, soit par emmanchement, soit par surmoulage, soit au moyen d'éléments de fixation, pouvant être démontables. A titre d'exemples nullement limitatifs, les éléments de fixation peuvent être du type par encliquetage élastique ou par vissage.

Ici, le deuxième couvercle 45 et la couronne 65 du deuxième étage de réduction 38 et du troisième étage de réduction 39 forment deux pièces distinctes.

En variante, non représentée, dans la configuration assemblée du réducteur 19, le premier couvercle 44 est intégré à la couronne 65 du premier étage de réduction 37, de sorte à former une unique pièce. En outre, le deuxième couvercle 45 est intégré à la couronne 65 du troisième étage de réduction 39, de sorte à former une unique pièce. Dans ce cas, l'unique pièce peut être réalisée, par exemple, par frittage. Cette pièce peut être réalisée, notamment, dans une matière plastique ou dans une matière métallique.

Avantageusement, dans la configuration assemblée du réducteur 19, le premier couvercle 44 est fixé, autrement dit est configuré pour être fixé, au deuxième couvercle 45, au moyen d'éléments de fixation 46, dont un seul est représenté à la figure 5, en particulier dans la configuration assemblée du réducteur 19.

Ici, les éléments de fixation 46 sont des éléments de fixation par encliquetage élastique, au nombre de deux et disposés de façon diamétralement opposée par rapport à l'axe de rotation X19, autrement dit à 180° l'un par rapport à l'autre, autour de l'axe de rotation X19.

Le nombre et le type des éléments de fixation ne sont pas limitatifs et peuvent être différents. Ils peuvent être, par exemple, au nombre de trois et disposés avec un angle de 120° l'un par rapport à l'autre, autour de l'axe de rotation du réducteur. Ils peuvent également être, par exemple, des éléments de fixation par vissage.

Avantageusement, dans la configuration assemblée du réducteur 19, le frein à ressort 25 est maintenu, autrement dit est configuré pour être maintenu, par les premier et deuxième couvercles 44, 45, au moyen d'éléments d'indexation 47, dont un seul est visible à la figure 5.

Ici, les éléments d'indexation 47 sont des éléments de blocage en rotation, autour de l'axe de rotation X19, tels que des éléments en saillie coopérant avec des échancrures de forme correspondante. Ces éléments d'indexation 47 sont au nombre de deux et disposés de façon diamétralement opposée par rapport à l'axe de rotation X19, autrement dit à 180° l'un par rapport à l'autre, autour de l'axe de rotation X19.

Le nombre et le type des éléments de blocage ne sont pas limitatifs et peuvent être différents. Ils peuvent être, par exemple, au nombre de trois et disposés avec un angle de 120° l'un par rapport à l'autre, autour de l'axe de rotation du réducteur.

Avantageusement, le réducteur 19 peut comprendre, en outre, une bague de fixation, non représentée. La bague de fixation est fixée, autrement dit est configurée pour être fixée, au carter 17 de l'actionneur électromécanique 11 au moyen d'au moins un élément de fixation, non représenté.

La bague de fixation peut être fixée au carter 17 au moyen d'une vis de fixation, non représentée, traversant un trou de passage, non représenté, ménagé dans le carter 17 et se vissant dans un trou de fixation de la bague de fixation.

Le nombre et le type des éléments de fixation de la bague de fixation au carter ne sont pas limitatifs. Ils peuvent être, par exemple, au nombre de deux ou plus. Ils peuvent être également, par exemple, des éléments de fixation par rivetage.

Avantageusement, l'actionneur électromécanique 11 comprend, en outre, un dispositif de détection de fin de course et/ou d'obstacle, lors du déplacement de l'écran 2. Ce dispositif peut être mécanique ou électronique.

Avantageusement, le dispositif de détection de fin de course et/ou d'obstacle est mis en oeuvre au moyen du microcontrôleur 30 de l'unité de contrôle 15 et, en particulier, au moyen d'un algorithme mis en oeuvre par ce microcontrôleur 30.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 24. La couronne 24 permet ainsi de réaliser un palier. La deuxième liaison pivot, non représentée, est réalisée au niveau d'une deuxième extrémité du tube d'enroulement 4, opposée à la première extrémité.

La couronne 24 forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif d'occultation 3.

Avantageusement, l'actionneur électromécanique 11 comprend, en outre, un support de couple 21.

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Ainsi, le support de couple 21 permet de fixer l'actionneur électromécanique 11 sur le dispositif de maintien 9, 23, en particulier à l'un des supports 23 ou à l'une des joues 10 du caisson 9.

Avantageusement, le support de couple 21 est en saillie au niveau de la première extrémité 17a du carter 17 de l'actionneur électromécanique 11.

Avantageusement, le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut permettre de supporter au moins une partie de l'unité de contrôle 15.

Avantageusement, le support de couple 21 est fixé au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des rainures emmanchées dans des échancrures ou une combinaison de ces différents éléments de fixation.

Avantageusement, le support de couple 21 comprend une première partie 21a, pouvant également être appelée « point fixe », et une deuxième partie 21b, pouvant également être appelée « tête d'actionneur ».

Avantageusement, la première partie 21a du support de couple 21 est assemblée, autrement dit est configurée pour être assemblée, avec le carter 17, en particulier dans la configuration assemblée de l'actionneur électromécanique 11. En outre, la deuxième partie 21b du support de couple 21 est configurée pour être assemblée, autrement dit est assemblée, avec le dispositif de maintien 9, 23, en particulier dans une configuration assemblée de l'actionneur électromécanique 11 dans le dispositif d'occultation 3.

Dans un exemple de réalisation, la deuxième partie 21b du support de couple 21 est assemblée, autrement dit est configurée pour être assemblée, sur la première partie 21a du support de couple 21, en particulier dans la configuration assemblée de l'actionneur électromécanique 11. Dans ce cas, la deuxième partie 21b du support de couple 21 est assemblée sur la première partie 21a du support de couple 21 au moyen d'éléments d'assemblage.

Ainsi, le support de couple 21 est constitué d'au moins deux pièces distinctes formant chacune respectivement les première et deuxième parties 21a, 21b du support de couple 21.

De cette manière, la deuxième partie 21b du support de couple 21 peut être interchangeable par rapport à la première partie 21a du support de couple 21, notamment en fonction de la forme et du type des éléments de maintien, non représentés, du dispositif de maintien 9, 23.

Dans un autre exemple de réalisation, le support de couple 21 peut être constitué d'une seule pièce formant les première et deuxième parties 21a, 21b du support de couple 21.

Avantageusement, la deuxième partie 21b du support de couple 21 peut présenter différentes formes extérieures, notamment une forme cannelée, dite « en étoile », autrement dit comprenant des reliefs sur son contour, ou une forme ronde, autrement dit dépourvue de reliefs sur son contour, comme illustrée aux figures 3 et 4.

Avantageusement, au moins une portion de la première partie 21a du support de couple 21 est de forme générale cylindrique et est disposée, autrement dit est configurée pour être disposée, à l'intérieur du carter 17, en particulier dans la configuration assemblée de l'actionneur électromécanique 11.

Avantageusement, un diamètre extérieur d'au moins une portion de la deuxième partie 21b du support de couple 21 est supérieur à un diamètre extérieur Ø17 du carter 17.

Avantageusement, le support de couple 21 comprend, en outre, une butée, non représentée. En outre, la butée est en appui, autrement dit est configurée pour être en appui, contre le carter 17, au niveau de la première extrémité 17a du carter 17, en particulier dans la configuration assemblée de l'actionneur électromécanique 11.

Ainsi, la butée du support de couple 21 permet de limiter l'enfoncement de la première partie 21a du support de couple 21 dans le carter 17, suivant la direction de l'axe de rotation X.

Ici, la butée du support de couple 21 comprend un épaulement. Plus particulièrement, elle est réalisée sous la forme d'une collerette, en particulier de forme cylindrique et à génératrice rectiligne.

Ici et comme illustré à la figure 4, la couronne 24 est disposée ou insérée, autrement dit est configurée pour être disposée ou insérée, autour du support de couple 21, en particulier de la deuxième partie 21b du support de couple 21, notamment dans la configuration assemblée de l'actionneur électromécanique 11. Dans ce cas, la couronne 24 est montée libre en rotation autour du support de couple 21, en particulier de la deuxième partie 21b du support de couple 21.

En variante, non représentée, la couronne 24 est disposée ou insérée, autrement dit est configurée pour être disposée ou insérée, autour d'une partie du carter 17, en particulier dans la configuration assemblée de l'actionneur électromécanique 11. Dans ce cas, la couronne 24 est montée libre en rotation autour du carter 17.

Dans une autre variante, non représentée, la couronne 24 est disposée ou insérée, autrement dit est configurée pour être disposée ou insérée, d'une part, autour du support de couple 21 et, d'autre part, autour d'une partie du carter 17 de l'actionneur électromécanique 11, en particulier de la première extrémité 17a du carter 17, notamment dans la configuration assemblée de l'actionneur électromécanique 11. Dans un tel cas, la couronne 24 peut être montée libre en rotation, d'une part, autour du support de couple 21 et, d'autre part, autour du carter 17 de l'actionneur électromécanique 11.

Avantageusement, le support de couple 21 comprend, en outre, un couvercle 22. Le couvercle 22 est monté, autrement dit est configuré pour être monté, sur le support de couple 21, notamment sur les première et/ou deuxième parties 21a, 21b du support de couple 21, en particulier dans la configuration assemblée de l'actionneur électromécanique 11.

Avantageusement, l'unité de contrôle 15 est disposée au moins en partie à l'intérieur du carter 17 de l'actionneur électromécanique 11.

Par ailleurs, l'unité de contrôle 15 peut être disposée au moins en partie à l'extérieur du carter 17 de l'actionneur électromécanique 11 et, en particulier, montée dans le support de couple 21 ou dans l'un des supports 23.

Avantageusement, l'unité de contrôle 15 comprend une première carte électronique 15a et une deuxième carte électronique 15b, comme illustré à la figure 4.

Ici, la première carte électronique 15a de l'unité de contrôle 15 est disposée à l'intérieur du carter 17 de l'actionneur électromécanique 11, en particulier dans la configuration assemblée de l'actionneur électromécanique 11. En outre, la deuxième carte électronique 15b est disposée à l'intérieur du support de couple 21 de l'actionneur électromécanique 11, en particulier dans la configuration assemblée de l'actionneur électromécanique 11.

Avantageusement, la première carte électronique 15a est configurée pour contrôler le moteur électrique 16. En outre, la deuxième carte électronique 15b est configurée pour, notamment, accéder à des fonctions de paramétrage et/ou de configuration de l'actionneur électromécanique 11, au moyen de dispositifs de sélection 61, dont un seul est représenté aux figures 3 et 4, et, éventuellement, d'affichage, non représentés.

Ici, l'unité de contrôle 15, en particulier chacune des première et deuxième cartes électroniques 15a, 15b, est alimentée en énergie électrique au moyen du câble d'alimentation électrique 18.

Avantageusement, le support de couple 21 comprend, autrement dit intègre, au moins un dispositif de sélection 61, en particulier un bouton, pouvant être, par exemple, de type poussoir ou magnétique. En outre, le ou chaque dispositif de sélection 61 est configuré, notamment, pour réaliser un réglage de l'actionneur électromécanique 11 au travers d'un ou plusieurs modes de configuration, pour appairer avec l'actionneur électromécanique 11 une ou plusieurs unités de commande 12, 13, pour réinitialiser un ou plusieurs paramètres, pouvant être, par exemple, une position de fin de course, pour réinitialiser la ou les unités de commande 12, 13 appairées ou encore pour commander le déplacement de l'écran 2.

Avantageusement, le support de couple 21 comprend, autrement dit intègre, au moins un dispositif d'affichage, non représenté. En outre, le ou chaque dispositif d'affichage est configuré, notamment, pour afficher une indication visuelle, pouvant être, par exemple, représentative d'un mode de fonctionnement de l'actionneur électromécanique 11, en particulier un mode de configuration ou un mode de commande, ou encore d'un état d'un organe du dispositif d'entraînement motorisé 5.

Avantageusement, l'actionneur électromécanique 11 comprend, en outre, un dispositif de transmission de couple 31.

Ici, le dispositif de transmission de couple 31 comprend un organe monobloc 32, pouvant également être appelé cardan, et un élément d'accouplement 62.

Le dispositif de transmission de couple 31 est logé, autrement dit est monté, à l'intérieur du carter 17 de l'actionneur électromécanique 11, en particulier dans la configuration assemblée de l'actionneur électromécanique 11.

Ici, l'arbre d'entrée 43 du réducteur 19 est accouplé, autrement dit est configuré pour être accouplé, avec le rotor 16a du moteur électrique 16 par l'intermédiaire du dispositif de transmission de couple 31, en particulier dans la configuration assemblée de l'actionneur électromécanique 11.

Avantageusement, l'organe monobloc 32 comprend un premier logement 54. Le premier logement 54 reçoit, autrement dit est configuré pour recevoir ou pour loger, une partie de l'arbre 53 du rotor 16a du moteur électrique 16, en particulier dans la configuration assemblée de l'actionneur électromécanique 11.

Ici, la partie de l'arbre 53 du rotor 16a du moteur électrique 16 est en contact direct avec le premier logement 54 de l'organe monobloc 32.

En variante, non représentée, le dispositif de transmission de couple 31 comprend, en outre, un adaptateur. L'adaptateur est monté, autrement dit est configuré pour être monté, sur une partie de l'arbre 53 du rotor 16a du moteur électrique 16, en particulier dans la configuration assemblée de l'actionneur électromécanique 11. Le montage peut être réalisé, par exemple, par un emmanchement en force de l'adaptateur sur la partie de l'arbre 53 du rotor 16a. Dans ce cas, le premier logement 54 reçoit, autrement dit est configuré pour recevoir ou pour loger, la partie de l'arbre 53 du rotor 16a du moteur électrique 16 par l'intermédiaire de l'adaptateur, en particulier dans la configuration assemblée de l'actionneur électromécanique 11. Ainsi, la partie de l'arbre 53 du rotor 16a du moteur électrique 16 est en contact avec le premier logement 54 de l'organe monobloc 32 au travers de l'adaptateur.

Avantageusement, le premier logement 54 de l'organe monobloc 32 présente une première forme, en particulier en forme de croix. La partie de l'arbre 53 du rotor 16a présente une deuxième forme, en particulier en forme de méplat, telle que, par exemple, l'extrémité libre d'un tournevis plat. En outre, la deuxième forme de la partie de l'arbre 53 du rotor 16a est configurée pour être insérée, autrement dit est insérée, à l'intérieur de la première forme du premier logement 54 de l'organe monobloc 32, en particulier dans la configuration assemblée de l'actionneur électromécanique 11.

En variante, non représentée, la première forme du premier logement 54 de l'organe monobloc 32 est en forme de fente.

Dans une autre variante, non représentée, la première forme du premier logement 54 de l'organe monobloc 32 comprend des trous, pouvant être, par exemple, au nombre de deux. En outre, la deuxième forme de la partie de l'arbre 53 du rotor 16a comprend des pions, tels que sous la forme d'une fourchette et pouvant être, par exemple, au nombre de deux.

Également dans une autre variante, non représentée, la première forme du premier logement 54 de l'organe monobloc 32 est une forme d'étoile ou de denture interne. En outre, la deuxième forme de la partie de l'arbre 53 du rotor 16a est une forme d'étoile ou de denture externe.

Avantageusement, l'organe monobloc 32 comprend un deuxième logement 55. Le deuxième logement 55 reçoit, autrement dit est configuré pour recevoir ou pour loger, une partie du pignon solaire 40 du premier étage de réduction 37, en particulier dans la configuration assemblée de l'actionneur électromécanique 11.

Avantageusement, l'élément d'accouplement 62 est assemblé, autrement dit est configuré pour être assemblé, à l'intérieur du deuxième logement 55 de l'organe monobloc 32, en particulier dans une configuration assemblée du dispositif de transmission de couple 31.

Ainsi, l'élément d'accouplement 62 permet de transmettre le couple fourni par le moteur électrique 16 à partir de l'organe monobloc 32 vers le réducteur 19, en particulier vers le premier étage de réduction 37.

Avantageusement, le pignon solaire 40 du premier étage de réduction 37 comprend l'arbre 59. En outre, l'élément d'accouplement 62 est assemblé sur l'arbre 59 du pignon solaire 40.

Ici, l'organe monobloc 32 et l'élément d'accouplement 62 sont deux pièces distinctes qui sont assemblées l'une avec l'autre, de sorte à être solidaires entre elles.

Ainsi, le dispositif de transmission de couple 31 est un sous-ensemble constitué par l'organe monobloc 32 et l'élément d'accouplement 62, de sorte à transmettre un couple entre le rotor 16a du moteur électrique 16 et l'arbre d'entrée 43 du réducteur 19, en particulier lors de l'activation électrique du moteur électrique 16 provoquant l'entraînement en rotation du rotor 16a.

Avantageusement, l'assemblage de l'élément d'accouplement 62 à l'intérieur du deuxième logement 55 de l'organe monobloc 32 est mis en oeuvre par emmanchement de l'élément d'accouplement 62 dans le deuxième logement 55 de l'organe monobloc 32.

En variante, l'assemblage de l'élément d'accouplement 62 à l'intérieur du deuxième logement 55 de l'organe monobloc 32 est mis en oeuvre par surmoulage de l'organe monobloc 32 autour de l'élément d'accouplement 62.

Avantageusement, l'élément d'accouplement 62 est réalisé dans une matière métallique, pouvant être, par exemple, un acier fritté.

Avantageusement, l'élément d'accouplement 62 comprend un orifice 60. En outre, l'orifice 60 de l'élément d'accouplement 62 reçoit, autrement dit est configuré pour recevoir ou pour loger, l'arbre 59 du pignon solaire 40 du premier étage de réduction 37, en particulier dans la configuration assemblée de l'actionneur électromécanique 11.

Ainsi, le deuxième logement 55 de l'organe monobloc 32 reçoit, autrement dit est configuré pour recevoir ou pour loger, l'arbre 59 du pignon solaire 40 du premier étage de réduction 37 par l'intermédiaire de l'élément d'accouplement 62, en particulier dans la configuration assemblée de l'actionneur électromécanique 11.

De cette manière, l'arbre 59 du pignon solaire 40 du premier étage de réduction 37 est en contact avec le deuxième logement 55 de l'organe monobloc 32 au travers de l'élément d'accouplement 62.

Avantageusement, l'assemblage de l'élément d'accouplement 62 sur l'arbre 59 du pignon solaire 40 du premier étage de réduction 37 est mis en oeuvre par emmanchement en force.

Ici et de manière nullement limitative, l'élément d'accouplement 62 est emmanché en force à l'intérieur du deuxième logement 55 de l'organe monobloc 32 puis est emmanché en force sur l'arbre 59 du pignon solaire 40 du premier étage de réduction 37.

En variante, non représentée, le dispositif de transmission de couple 31 est dépourvu de l'élément d'accouplement 62. Ainsi, l'arbre 59 du pignon solaire 40 du premier étage de réduction 37 est en contact direct avec le deuxième logement 55 de l'organe monobloc 32. Dans ce cas, l'arbre 59 du pignon solaire 40 du premier étage de réduction 37 présente une forme, en particulier non-circulaire, compatible avec la forme du deuxième logement 55 de l'organe monobloc 32.

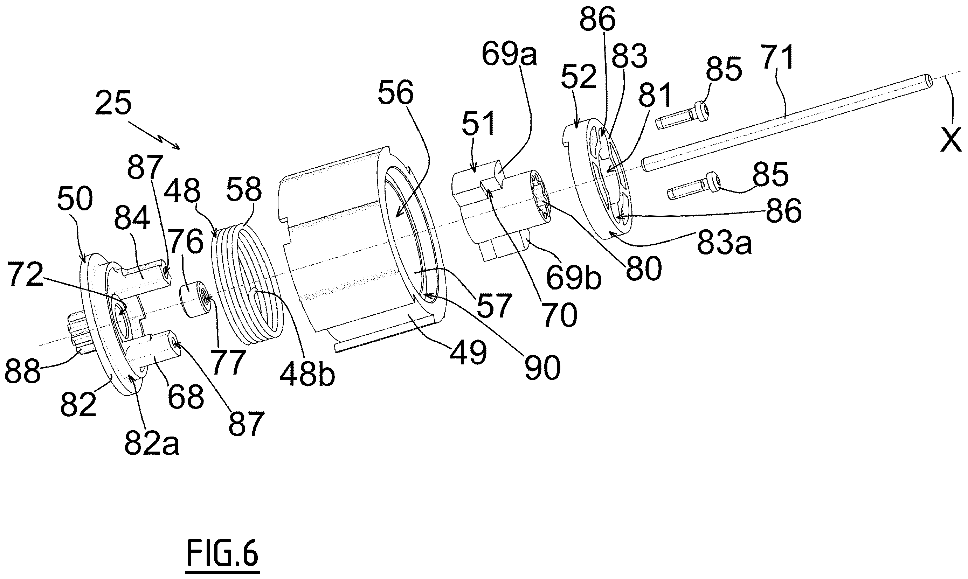

On décrit à présent, en référence aux figures 6 à 9, le frein à ressort 25 de l'actionneur électromécanique 11, illustré aux figures 3 à 5, ainsi que l'assemblage du frein à ressort 25 avec le réducteur 19.

Le frein à ressort 25 comprend au moins un ressort hélicoïdal 48, un tambour 49, un organe d'entrée 50, un organe de sortie 51 et, éventuellement, un capot 52.

Avantageusement, l'organe d'entrée 50 est entraîné, autrement dit est configuré pour être entraîné, en rotation par le moteur électrique 16.

Avantageusement, le tambour 49 et la première couronne 65 du premier étage de réduction 37 sont deux pièces distinctes.

En variante, non représentée, le tambour 49 et la première couronne 65 du premier étage de réduction 37 sont réalisées au moyen d'une unique pièce.

Avantageusement, le tambour 49 comprend un logement 56.

Ici, le logement 56 du tambour 49 est de forme cylindrique. En outre, le logement 56 du tambour 49 est débouchant à ses deux extrémités axiales.

Avantageusement, le ressort hélicoïdal 48, l'organe d'entrée 50, l'organe de sortie 51 et, éventuellement, le capot 52 sont disposés, autrement dit sont configurés pour être disposés, au moins en partie à l'intérieur du logement 56 du tambour 49, en particulier dans une configuration assemblée du frein à ressort 25.

Ici, l'organe de sortie 51 est disposé en vis-à-vis de l'organe d'entrée 50.

Ici, le ressort hélicoïdal 48 comporte une pluralité de spires.

Les spires du ressort hélicoïdal 48 sont centrées sur un axe confondu avec l'axe de rotation X, lorsque le frein à ressort 25 est assemblé puis monté dans l'actionneur électromécanique 11. De même, l'organe d'entrée 24 et l'organe de sortie 25 sont centrés sur un axe confondu avec l'axe de rotation X, lorsque le frein à ressort 25 est assemblé puis monté dans l'actionneur électromécanique 11.

L'axe de chacun des organes 48, 49, 50, 51, 52 du frein à ressort 25 n'est pas représenté sur les figures 6 à 9, de sorte à simplifier la lecture de celles-ci.

Ici, le tambour 49 comprend une surface de frottement 57. La surface de frottement 57, coopère, autrement dit est configurée pour coopérer, avec au moins une spire du ressort hélicoïdal 48, en particulier dans la configuration assemblée du frein à ressort 25.

Avantageusement, la surface de frottement 57 est une surface interne du tambour 49 délimitant, autrement dit qui délimite, radialement le logement 56, en l'occurrence sur l'extérieur.

Ainsi, au moins une spire du ressort hélicoïdal 48 est contrainte radialement par le logement 56 du tambour 49.

Ici, le ressort hélicoïdal 48 est monté serrant à l'intérieur du logement 56 du tambour 49, de sorte à solidariser par friction le ressort hélicoïdal 48 et le tambour 49, lorsque le ressort hélicoïdal 48 est au repos.

Avantageusement, le ressort hélicoïdal 48 est formé à partir d'un fil 58. Le ressort hélicoïdal 48 est à spires jointives, dans un état de repos du frein à ressort 25.

Une première extrémité du ressort hélicoïdal 48 forme une première patte 48a. Une deuxième extrémité du ressort hélicoïdal 48 forme une deuxième patte 48b.

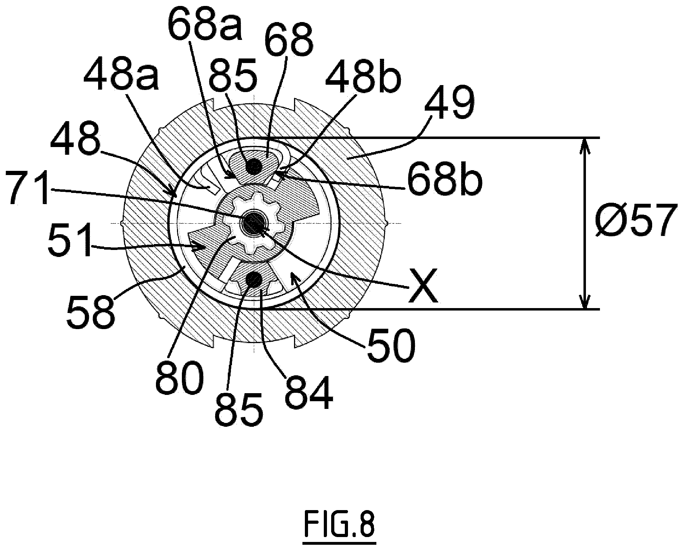

Ainsi, le ressort hélicoïdal 48 comporte deux pattes 48a, 48b. Seule la première patte 48a est visible à la figure 6 et les première et deuxième pattes 48a, 48b sont visibles à la figure 8.

Avantageusement, chacune des première et deuxième pattes 48a, 48b s'étend radialement par rapport à l'axe de rotation X et, en particulier, vers l'intérieur du ressort hélicoïdal 48.

Dans cet exemple de réalisation, les première et deuxième pattes 48a, 48b du ressort hélicoïdal 48 s'étendent radialement par rapport à l'axe de rotation X et vers l'intérieur du ressort hélicoïdal 48, notamment à partir des spires du ressort hélicoïdal 48 vers l'axe central du ressort hélicoïdal 48, comme illustré à la figure 8.

En variante, non représentée, chacune des première et deuxième pattes 48a, 48b du ressort hélicoïdal 48 s'étend axialement par rapport à l'axe de rotation X, en particulier dans la configuration assemblée du frein à ressort 25.

Avantageusement, l'organe d'entrée 50 comprend une dent d'entraînement 68.

Avantageusement, la dent d'entraînement 68 s'étend, autrement dit est configurée pour s'étendre, selon une direction parallèle à l'axe de rotation X, entre l'organe d'entrée 50 et le capot 52, en particulier dans la configuration assemblée du frein à ressort 25.

Avantageusement, la dent d'entraînement 68 de l'organe d'entrée 50 est insérée, autrement dit est configurée pour être insérée, à l'intérieur du ressort hélicoïdal 48, en particulier dans la configuration assemblée du frein à ressort 25.

Avantageusement, l'organe d'entrée 50, en particulier la dent d'entraînement 68 de l'organe d'entrée 50, coopère, autrement dit est configuré pour coopérer, avec au moins l'une des première et deuxième pattes 48a, 48b du ressort hélicoïdal 48, en particulier dans la configuration assemblée du frein à ressort 25, de sorte à entraîner en rotation le ressort hélicoïdal 48 autour de l'axe de rotation X dans un premier sens de rotation.

Un tel mouvement libère le frein à ressort 25 et, plus particulièrement, le ressort hélicoïdal 48 par rapport au tambour 49.

L'effort de frottement entre au moins une spire du ressort hélicoïdal 48 et la surface de frottement 57 du tambour 49 est diminué lorsque le ressort hélicoïdal 48 est entraîné en rotation dans le premier sens de rotation.

Autrement dit, ce mouvement tend à diminuer le diamètre de l'enveloppe externe du ressort hélicoïdal 48 et donc à diminuer la contrainte radiale entre le ressort hélicoïdal 48 et la surface de frottement 57 du tambour 49.

Ainsi, le mouvement généré par le moteur électrique 16 peut être transmis de l'organe d'entrée 50 à l'organe de sortie 51.

L'enveloppe externe du ressort hélicoïdal 48 est définie par les génératrices externes des spires du ressort hélicoïdal 48.

Avantageusement, l'organe de sortie 51 comprend au moins une oreille 69a, 69b.

Ici, l'organe de sortie 51 comprend une première oreille 69a et une deuxième oreille 69b, comme illustré aux figures 6 et 8.

Avantageusement, la ou chacune des première et deuxième oreilles 69a, 69b de l'organe de sortie 51 comprend un évidement 70. Seul l'évidement 70 de la première oreille 69a est visible à la figure 6.

Ici, l'évidement 70 de la ou de chacune des première et deuxième oreilles 69a, 69b de l'organe de sortie 51 coopère, autrement dit est configuré pour coopérer, avec l'une des première et deuxième pattes 48a, 48b du ressort hélicoïdal 48, en particulier dans la configuration assemblée du frein à ressort 25.

Avantageusement, les première et deuxième oreilles 69a, 69b de l'organe de sortie 51 sont disposées de manière symétrique par rapport à l'axe de rotation X, de sorte à garantir un équilibrage du frein à ressort 25, lors d'un mouvement de rotation de l'organe d'entrée 50 par rapport à l'organe de sortie 51 autour de l'axe de rotation X.

Avantageusement, les première et deuxième oreilles 69a, 69b de l'organe de sortie 51 sont insérées, autrement dit configurées pour être insérées, à l'intérieur du ressort hélicoïdal 48, en particulier dans la configuration assemblée du frein à ressort 25.

Avantageusement, l'organe de sortie 51, en particulier l'une des première et deuxième oreilles 69a, 69b, coopère, autrement dit est configuré pour coopérer, avec au moins l'une des première et deuxième pattes 48a, 48b du ressort hélicoïdal 48, en particulier dans la configuration assemblée du frein à ressort 25, de sorte à entraîner en rotation le ressort hélicoïdal 48 autour de l'axe de rotation X dans un deuxième sens de rotation. Le deuxième sens de rotation est opposé au premier sens de rotation.

Un tel mouvement active le frein à ressort 25, c'est-à-dire tend à bloquer ou à freiner la rotation du ressort hélicoïdal 48 à l'intérieur du logement 56 du tambour 49.

L'effort de frottement entre au moins une spire du ressort hélicoïdal 48 et la surface de frottement 57 du tambour 49 est augmenté lorsque le ressort hélicoïdal 48 est entraîné dans le deuxième sens de rotation.

Autrement dit, ce mouvement tend à augmenter le diamètre de l'enveloppe externe du ressort hélicoïdal 48, en particulier par le rapprochement des première et deuxième pattes 48a, 48b du ressort hélicoïdal 48, et donc à augmenter la contrainte radiale entre le ressort hélicoïdal 48 et la surface de frottement 57 du tambour 49.

Avantageusement, le frein à ressort 25 comprend un lubrifiant, non représenté, disposé entre le ressort hélicoïdal 48 et la surface de frottement 57 du tambour 49. Le lubrifiant est, préférentiellement, de la graisse.

Avantageusement, dans la configuration assemblée du frein à ressort 25, la première patte 48a du ressort hélicoïdal 48 coopère, autrement dit est configurée pour coopérer, avec une première face 68a de la dent d'entraînement 68 de l'organe d'entrée 50 et la deuxième patte 48b du ressort hélicoïdal 48 coopère, autrement dit est configurée pour coopérer, avec une deuxième face 68b de la dent d'entraînement 68 de l'organe d'entrée 50. La deuxième face 68b de la dent d'entraînement 68 est opposée à la première face 68a de la dent d'entraînement 68.

Ainsi, la dent d'entraînement 68 de l'organe d'entrée 50 est disposée entre les première et deuxième pattes 48a, 48b du ressort hélicoïdal 48 et coopère, autrement dit est configurée pour coopérer, avec l'une ou l'autre des pattes 48a du ressort hélicoïdal 48, selon le sens d'entraînement en rotation généré par le moteur électrique 16.

De cette manière, les première et deuxième faces 68a, 68b de la dent d'entraînement 68 constituent deux faces d'entraînement du ressort hélicoïdal 48. Chaque face d'entraînement 68a, 68b de la dent d'entraînement 68 coopère, autrement dit est configurée pour coopérer, avec l'une des première et deuxième pattes 48a, 48b du ressort hélicoïdal 48, en particulier dans la configuration assemblée du frein à ressort 25.

Ici, l'évidement 70 de la première oreille 69a de l'organe de sortie 51 coopère, autrement dit est configuré pour coopérer, avec la première patte 48a du ressort hélicoïdal 48, en particulier dans la configuration assemblée du frein à ressort 25. En outre, l'évidement 70 de la deuxième oreille 69b de l'organe de sortie 51 coopère, autrement dit est configuré pour coopérer, avec la deuxième patte 48b du ressort hélicoïdal 48, en particulier dans la configuration assemblée du frein à ressort 25.

L'actionneur électromécanique 11 comprend, en outre, un arbre de centrage 71. L'organe d'entrée 50 comprend un premier alésage 72. L'organe de sortie 51 comprend un premier alésage 73 et un deuxième alésage 74. Le pignon solaire 40 du deuxième étage de réduction 38 comprend un alésage 75.

L'arbre de centrage 71 est monté, autrement dit est configuré pour être inséré ou logé, à l'intérieur du premier alésage 73 de l'organe de sortie 51 et de l'alésage 75 du pignon solaire 40, en particulier dans la configuration assemblée de l'actionneur électromécanique 11.

Avantageusement, l'arbre de centrage 71 est monté, autrement dit est configuré pour être inséré ou logé, avec un ajustement libre à l'intérieur du premier alésage 73 de l'organe de sortie 51, en particulier dans la configuration assemblée de l'actionneur électromécanique 11.

Le frein à ressort 25 comprend, en outre, un coussinet 76. Le coussinet 76 comprend un alésage 77. L'arbre de centrage 71 est monté, autrement dit est configuré pour être inséré ou logé, à l'intérieur de l'alésage 77 du coussinet 76, en particulier dans la configuration assemblée de l'actionneur électromécanique 11. Le coussinet 76 est monté, autrement dit est configuré pour être inséré ou logé, à l'intérieur du premier alésage 72 de l'organe d'entrée 50 avec un ajustement serré, en particulier dans la configuration assemblée du frein à ressort 25. En outre, le coussinet 76 est monté, autrement dit est configuré pour être inséré ou logé, à l'intérieur du deuxième alésage 74 de l'organe de sortie 51 avec un ajustement libre.

Par l'expression « ajustement libre », on entend que l'assemblage de deux pièces, l'une comprenant un alésage et l'autre étant ou comprenant un arbre, est avec un jeu. Autrement dit l'ajustement est positif, de sorte qu'un jeu radial existe entre l'alésage et l'arbre, c'est-à-dire que l'arbre a une dimension inférieure à celle de l'alésage.

Par l'expression « ajustement serré », on entend que l'assemblage de deux pièces, l'une comprenant un alésage et l'autre étant ou comprenant un arbre, est avec serrage. Autrement dit l'ajustement est négatif, de sorte qu'un serrage existe entre l'alésage et l'arbre, c'est-à-dire que l'arbre a une dimension supérieure ou égale à celle de l'alésage.

Ainsi, cette construction de l'actionneur électromécanique 11, où le frein à ressort 25 est équipé du coussinet 76 monté à l'intérieur du premier alésage 72 de l'organe d'entrée 50 et à l'intérieur du deuxième alésage 74 de l'organe de sortie 51, permet, lors de l'assemblage du réducteur 19 avec le frein à ressort 25, de centrer l'organe de sortie 51 par rapport à l'organe d'entrée 50 à l'intérieur du frein à ressort 25, même lorsque l'arbre de centrage 71 n'est pas inséré dans le premier alésage 72 de l'organe d'entrée 50, dans l'alésage 77 du coussinet 76, dans le premier alésage 73 de l'organe de sortie 51 et dans l'alésage 75 du pignon solaire 40 du deuxième étage de réduction 38.

En outre, le coussinet 76 permet de garantir un centrage précis de l'arbre de centrage 71 à l'intérieur du frein à ressort 25 et du deuxième étage de réduction 38, disposé entre le frein à ressort 25 et l'arbre de sortie 20, en particulier des deuxième et troisième étages de réduction 38, 39, disposés entre le frein à ressort 25 et l'arbre de sortie 20.

Par ailleurs, dans la configuration assemblée du frein à ressort 25, l'arbre de centrage 71 est monté, autrement dit est configuré pour être inséré ou logé, dans les premier et deuxième alésages 73, 74 de l'organe de sortie 51, dans l'alésage 77 du coussinet 76, dans le premier alésage 72 de l'organe d'entrée 50.

Ici, l'arbre de centrage 71 est centré par rapport à l'axe de rotation X, en particulier dans la configuration assemblée de l'actionneur électromécanique 11.

Avantageusement, le coussinet 76 est réalisé en bronze.

La matière du coussinet n'est pas limitative et peut être différente. Elle peut être, par exemple, un acier fritté ou une matière plastique, telle que du poly-acétal, également appelé POM, ou du Poly-Tétra-Fluoro-Ethylène, appelé également PTFE.

Avantageusement, le porte-satellites 66 du deuxième étage de réduction 38 comprend un alésage 78. Le pignon solaire 40 du troisième étage de réduction 39 comprend également un alésage 75. Le porte-satellites 66 du troisième étage de réduction 39 comprend également un alésage 78. En outre, l'arbre de centrage 71 est monté, autrement dit est configuré pour être inséré ou logé, à l'intérieur de l'alésage 78 du porte-satellites 66 du deuxième étage de réduction 38, de l'alésage 75 du pignon solaire 40 du troisième étage de réduction 39 et de l'alésage 78 du porte-satellites 66 du troisième étage de réduction 39, en particulier dans la configuration assemblée de l'actionneur électromécanique 11.

Avantageusement, l'organe d'entrée 50 comprend, en outre, un deuxième alésage 79. En outre, l'arbre de centrage 71 est monté, autrement dit est configuré pour être inséré ou logé, avec un ajustement libre à l'intérieur du deuxième alésage 79 de l'organe d'entrée 50, en particulier dans la configuration assemblée de l'actionneur électromécanique 11.

Avantageusement, l'organe d'entrée 50 comprend une interface d'accouplement 88. Le porte-satellites 66 du premier étage de réduction 37 comprend une interface d'accouplement 89, qui est en l'occurrence identique à celle du porte-satellites 66 du deuxième étage de réduction 38. En outre, l'interface d'accouplement 89 du porte-satellites 66 du premier étage de réduction 37 coopère, autrement dit est configurée pour coopérer, avec l'interface d'accouplement 88 de l'organe d'entrée 50, en particulier dans la configuration assemblée de l'actionneur électromécanique 11.

Ici, l'interface d'accouplement 89 du porte-satellites 66 du premier étage de réduction 37 est une denture interne. L'interface d'accouplement 88 de l'organe d'entrée 50 est une denture externe. En outre, l'interface d'accouplement 89 du porte-satellites 66 du premier étage de réduction 37 s'engrène, autrement dit est configurée pour s'engrener, avec l'interface d'accouplement 88 de l'organe d'entrée 50, en particulier dans la configuration assemblée de l'actionneur électromécanique 11.

Ainsi, l'interface d'accouplement 89 du porte-satellites 66 du premier étage de réduction 37 permet de recevoir et de transmettre un couple provenant du moteur électrique 16 et, en l'occurrence, du premier étage de réduction 37 au frein à ressort 25.

Avantageusement, l'arbre de centrage 71 est monté, autrement dit est configuré pour être inséré ou logé, avec un ajustement serré à l'intérieur de l'alésage 78 du porte-satellites 66 du troisième étage de réduction 39, en particulier dans la configuration assemblée de l'actionneur électromécanique 11.

En variante, non représentée, l'arbre de centrage 71 est monté, autrement dit est configuré pour être inséré ou logé, à l'intérieur de l'alésage 78 du porte-satellites 66 du troisième étage de réduction 39 par l'intermédiaire d'un autre coussinet, en particulier dans la configuration assemblée de l'actionneur électromécanique 11. Dans ce cas, l'autre coussinet comprend également un alésage. L'arbre de centrage 71 est monté, autrement dit est configuré pour être inséré ou logé, à l'intérieur de l'alésage de l'autre coussinet, en particulier dans la configuration assemblée de l'actionneur électromécanique 11. En outre, l'autre coussinet est monté, autrement dit est configuré pour être inséré ou logé, à l'intérieur de l'alésage 78 du porte-satellites 66 du troisième étage de réduction 39 avec un ajustement serré, en particulier dans la configuration assemblée de l'actionneur électromécanique 11.

Avantageusement, l'arbre de centrage 71 est monté, autrement dit est configuré pour être inséré ou logé, avec un ajustement libre à l'intérieur de l'alésage 75 du pignon solaire 40 du deuxième étage de réduction 38, ainsi que du troisième étage de réduction 39, en particulier dans la configuration assemblée de l'actionneur électromécanique 11.

Avantageusement, l'organe de sortie 51 comprend une deuxième interface d'accouplement 80. En outre, la deuxième interface d'accouplement 80 de l'organe de sortie 51 coopère, autrement dit est configurée pour coopérer, avec le pignon solaire 40 du deuxième étage de réduction 38, en particulier dans la configuration assemblée de l'actionneur électromécanique 11.

Ici, la deuxième interface d'accouplement 80 de l'organe de sortie 51 est une denture interne. En outre, la deuxième interface d'accouplement 80 de l'organe de sortie 51 s'engrène, autrement dit est configurée pour s'engrener, avec le pignon solaire 40 du deuxième étage de réduction 38, notamment avec la première denture 42 du pignon solaire 40 du deuxième étage de réduction 38, en particulier dans la configuration assemblée de l'actionneur électromécanique 11.

Ainsi, la deuxième interface d'accouplement 80 de l'organe de sortie 51 permet de recevoir un couple provenant du moteur électrique 16 et, en l'occurrence, du frein à ressort 25, et de le transmettre au deuxième étage de réduction 38.

Avantageusement, l'interface d'accouplement 89 du porte-satellites 66 du premier étage de réduction 37 et du deuxième étage de réduction 38, l'interface d'accouplement 88 de l'organe d'entrée 50 et l'interface d'accouplement 80 de l'organe de sortie 51 sont respectivement centrées par rapport à l'axe de rotation X, en particulier dans la configuration assemblée de l'actionneur électromécanique 11.

Avantageusement, l'interface d'accouplement 89 du porte-satellites 66 du deuxième étage de réduction 38, l'interface d'accouplement 80 de l'organe de sortie 51 et, éventuellement, l'interface d'accouplement 89 du porte-satellites 66 du premier étage de réduction 37 sont identiques, en l'occurrence présentent la même denture interne. En outre, la première denture 42 du pignon solaire 40 du deuxième étage de réduction 38 et la première denture 42 du pignon solaire 40 du troisième étage de réduction 39 et, éventuellement, l'interface d'accouplement 88 de l'organe d'entrée 50, en l'occurrence la denture la constituant, sont identiques.

Avantageusement, le capot 52 comprend une ouverture 81. En outre, l'ouverture 81 du capot 52 est traversante. L'ouverture 81 du capot 52 coopère, autrement dit est configurée pour coopérer, avec l'interface d'accouplement 80 de l'organe de sortie 51, en particulier dans la configuration assemblée du frein à ressort 25.

Ainsi, l'interface d'accouplement 80 de l'organe de sortie 51 est inséré dans l'ouverture 81 du capot 52, de sorte à s'étendre de part et d'autre du capot 52, en particulier dans la configuration assemblée du frein à ressort 25.

Avantageusement, l'organe d'entrée 50 comprend un premier plateau 82. En outre, le capot 52 comprend un deuxième plateau 83.

Avantageusement, dans la configuration assemblée du frein à ressort 25, la première patte 48a du ressort hélicoïdal 48 s'étend le long du premier plateau 82 de l'organe d'entrée 50 et la deuxième patte 48b du ressort hélicoïdal 48 s'étend le long du deuxième plateau 83 du capot 52.

Ici, le premier plateau 82 est solidaire avec la dent d'entraînement 68, de préférence monobloc avec celle-ci.

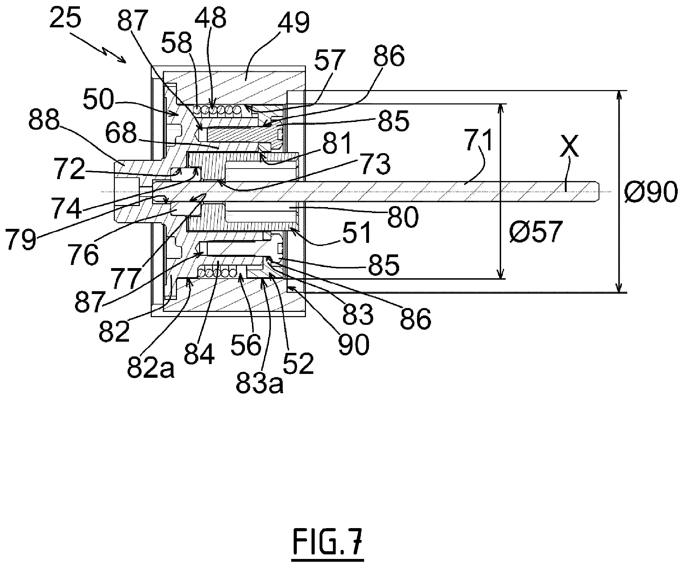

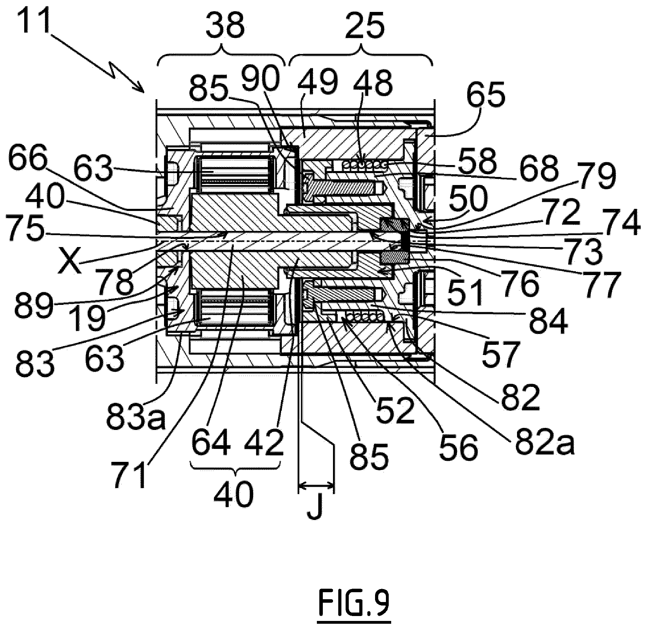

Ici et tel qu'illustré aux figures 7 et 9, le ressort hélicoïdal 48 et l'organe de sortie 51 sont maintenus en position axialement entre le premier plateau 82 de l'organe d'entrée 50 et le deuxième plateau 83 du capot 52.

Avantageusement, l'organe d'entrée 50 et, plus particulièrement, le premier plateau 82 comprend une entretoise 84. L'entretoise 84 est configurée pour s'étendre, autrement dit s'étend, selon une direction parallèle à l'axe de rotation X, entre l'organe d'entrée 50 et le capot 52, en particulier dans la configuration assemblée du frein à ressort 25.

Ainsi, l'entretoise 84 de l'organe d'entrée 50 permet de maintenir un écartement axial entre l'organe d'entrée 50 et le capot 52 et, plus particulièrement, entre les premier et deuxième plateaux 82, 83.

Ici, l'entretoise 84 de l'organe d'entrée 50 est disposée de façon diamétralement opposée à la dent d'entraînement 68 de l'organe d'entrée 50, comme illustré aux figures 6 à 9.

En outre, dans cet exemple de réalisation, la dent d'entraînement 68 de l'organe d'entrée 50 forme une autre entretoise.

Ainsi, la dent d'entraînement 68 de l'organe d'entrée 50 permet également de maintenir l'écartement axial entre l'organe d'entrée 50 et le capot 52 et, plus particulièrement, entre les premier et deuxième plateaux 82, 83.

En variante, non représentée, le capot 52 et, plus particulièrement, le deuxième plateau 83 comprend l'entretoise 84. L'entretoise 84 s'étend alors également entre l'organe d'entrée 50 et le capot 52, en particulier dans la configuration assemblée du frein à ressort 25. Dans ce cas, l'entretoise 84 du capot 52 peut être disposée de façon diamétralement opposée à la dent d'entraînement 68 de l'organe d'entrée 50, par rapport à l'axe de rotation X, en particulier dans la configuration assemblée du frein à ressort 25.

Ici, la dent d'entraînement 68 et l'entretoise 84 permettent de réaliser le frein à ressort 25, en particulier l'organe d'entrée 50, de manière symétrique par rapport à l'axe de rotation X, de sorte à garantir un équilibrage du frein à ressort 25, lors d'un mouvement de rotation de l'organe d'entrée 50 par rapport à l'organe de sortie 51 autour de l'axe de rotation X.

Ici et tel qu'illustré aux figures 6, 7 et 9, les premier et deuxième plateaux 82, 83 comprennent chacun une collerette périphérique 82a, 83a. Les deux collerettes périphériques 82a, 83a sont disposées en vis-à-vis l'une de l'autre suivant l'axe de rotation X, en particulier dans la configuration assemblée du frein à ressort 25.

Avantageusement, l'organe d'entrée 50 est centré, autrement dit est configuré pour être centré, par rapport au logement 56 du tambour 49, selon la direction de l'axe de rotation X, au moyen de la collerette périphérique 82a du deuxième plateau 82 et de la surface de frottement 57 du tambour 49, en particulier dans la configuration assemblée du frein à ressort 25.

Avantageusement, une première zone de centrage de l'organe d'entrée 50 par rapport au logement 56 du tambour 49 et une deuxième zone de positionnement du coussinet 76 à l'intérieur du frein à ressort 25 sont disposées au moins en partie en recouvrement le long de l'axe de rotation X. En d'autres termes, la première zone de centrage et la deuxième zone de positionnement sont au moins partiellement en vis-à-vis selon une direction orthogonale à l'axe de rotation X.

Ainsi, un recoupement, le long de l'axe de rotation X, entre la première zone de centrage et la deuxième zone de positionnement permet de limiter un bruit de fonctionnement du frein à ressort 25.

De cette manière, des efforts radiaux engendrés par le pignon solaire 40 et les pignons satellites 63 du premier étage de réduction 37 et, plus particulièrement, de chacun des premier et deuxième étages de réduction 37, 38 sont transmis au tambour 49 par l'intermédiaire de l'organe d'entrée 50, de sorte à limiter un bruit de fonctionnement du frein à ressort 25.

Avantageusement, dans la configuration assemblée du frein à ressort 25, la première patte 48a du ressort hélicoïdal 48 est disposée entre la première face 68a de la dent d'entraînement 68 de l'organe d'entrée 50 et l'entretoise 84. En outre, la deuxième patte 48b du ressort hélicoïdal 48 est disposée entre la deuxième face 68b de la dent d'entraînement 68 de l'organe d'entrée 50 et l'entretoise 84.

Avantageusement, l'organe d'entrée 50 et le capot 52 et, plus particulièrement, les premier et deuxième plateaux 82, 83 sont maintenus solidaires en rotation autour de l'axe de rotation X, en particulier dans la configuration assemblée du frein à ressort 25.

Ici, l'organe d'entrée 50 et le capot 52 sont fixés l'un à l'autre au moyen d'éléments de fixation 85.

Avantageusement, les éléments de fixation 85 de l'organe d'entrée 50 et du capot 52 sont des éléments de fixation par vissage, en particulier au nombre de deux.

Le nombre d'éléments de fixation de l'organe d'entrée et du capot n'est pas limitatif et peut être différent, en particulier supérieur ou égal à trois.

Ici, un premier élément de fixation 85 de l'organe d'entrée 50 est disposé au niveau de la dent d'entraînement 68 de l'organe d'entrée 50. En outre, un deuxième élément de fixation 85 de l'organe d'entrée 50 est disposé au niveau de l'entretoise 84 de l'organe d'entrée 50.

Ici, chacun des premier et deuxième éléments de fixation 85 est inséré au travers d'une encoche 86 du capot 52, en l'occurrence du deuxième plateau 83, puis vissé à l'intérieur d'un fût de vissage 87 de l'organe d'entrée 50. En outre, un premier fût de vissage 87 est ménagé dans la dent d'entraînement 68 de l'organe d'entrée 50 et un deuxième fût de vissage 87 est ménagé dans l'entretoise 84 de l'organe d'entrée 50.

En variante, non représentée, les éléments de fixation 85 de l'organe d'entrée 50 et du capot 52 sont des éléments de fixation par emboîtement et, en particulier, des plots disposés au niveau de la dent d'entraînement 68 et de l'entretoise 84 et des trous ménagés dans le capot 52, en l'occurrence dans le deuxième plateau 83.

En variante, non représentée, l'organe d'entrée 50 et le capot 52 peuvent être maintenus solidaires au moyen d'éléments de fixation par encliquetage élastique ou par sertissage. Ainsi, les éléments de fixation peuvent être, notamment, des éléments de fixation par encliquetage élastique ou des arbres sertis dans des logements.

En variante, non représentée, les éléments de fixation 85 de l'organe d'entrée 50 et du capot 52 peuvent être une combinaison des différents éléments de fixation décrits précédemment.

Avantageusement, l'organe d'entrée 50 et l'organe de sortie 51 sont en matière plastique. En outre, le capot 52 est également en matière plastique.

A titre d'exemple nullement limitatif, la matière plastique de l'organe d'entrée 50, de l'organe de sortie 51 et du capot 52 est du poly-butylène téréphtalate, également appelé PBT, ou du poly-acétal, également appelé POM.

Ainsi, l'utilisation d'une matière plastique pour l'organe d'entrée 50, l'organe de sortie 51 et le capot 52 permet de réduire le bruit de fonctionnement du frein à ressort 25, notamment généré par un frottement contre le tambour 49.

En variante, l'organe de sortie 51 peut être réalisé en zamac (acronyme des noms des métaux qui le composent : zinc, aluminium, magnésium et cuivre).

Ici, le tambour 49 est réalisé en acier, notamment en acier fritté.

Ainsi, l'utilisation de l'acier fritté pour réaliser le tambour 49 permet de diminuer la résistance au frottement du ressort hélicoïdal 48 contre la surface de frottement 57 du tambour 49.

En variante, le tambour 49 est réalisé dans une matière plastique, pouvant être, par exemple, du poly-acétal, également appelé POM, du polyamide, également appelé PA, ou du polypropylène, également appelé PP.

Avantageusement, la surface de frottement 57 du tambour 49 présente un diamètre Ø57 inférieur ou égal à quarante-cinq millimètres, notamment lorsque le diamètre extérieur 017 du carter 17 présente une valeur inférieure ou égale à soixante millimètres, de préférence inférieur ou égal à vingt-deux millimètres et, plus particulièrement, de l'ordre de vingt-et-un millimètres, notamment lorsque le diamètre extérieur Ø17 du carter 17 présente une valeur de quarante millimètres.

Ainsi, le tambour 49 présente un volume qui est maximisé en réduisant le diamètre Ø57 de sa surface de frottement 57.

Avantageusement, le tambour 49 comprend un épaulement 90. En outre, le porte-satellites 66 du deuxième étage de réduction 38 est configuré pour être en appui, autrement dit est prévu pour être en appui, notamment en fonction des tolérances de fabrication, contre l'épaulement 90 du tambour 49, en particulier dans la configuration assemblée de l'actionneur électromécanique 11.

Ici, l'épaulement 90 est une surface d'appui circulaire définie au voisinage d'une extrémité du tambour 49 qui est orientée vers le deuxième étage de réduction 38, en particulier dans la configuration assemblée de l'actionneur électromécanique 11.

Ainsi, l'épaulement 90 permet de centrer radialement le porte-satellites 66 du deuxième étage de réduction 38 par rapport au tambour 49 suivant une direction orthogonale à l'axe de rotation X et de réaliser une butée axiale du porte-satellites 66 du deuxième étage de réduction 38 par rapport au tambour 49 suivant la direction de l'axe de rotation X.

De cette manière, la zone d'appui du porte-satellites 66 du deuxième étage de réduction 38 contre le tambour 49 suivant la direction de l'axe de rotation X est limitée à un diamètre Ø90, autrement dit à une largeur radiale ou à une hauteur, de l'épaulement 90.

Par conséquent, la butée axiale du porte-satellites 66 du deuxième étage de réduction 38 par rapport au tambour 49 réalisée par l'épaulement 90 du tambour 49 permet de supprimer les efforts axiaux exercés sur l'organe d'entrée 50 et l'organe de sortie 51.

En outre, dans le cas où le tambour 49 est réalisé dans une matière métallique, en particulier en acier fritté, le centrage du porte-satellites 66 du deuxième étage de réduction 38 par rapport au tambour 49 est plus précis. La géométrie et les tolérances de fabrication des pièces métalliques sont plus précises que celles des pièces en matière plastique obtenues par un procédé de moulage par injection.

Par conséquent, l'amélioration de la précision de centrage du porte-satellites 66 du deuxième étage de réduction 38 par rapport au tambour 49 permet de réduire le bruit de fonctionnement du réducteur 19, étant donné que le porte-satellites 66 du deuxième étage de réduction 38 est mis en appui contre l'épaulement 90 du tambour 49 présentant une précision accrue au niveau de sa géométrie, notamment en termes de planéité et de rugosité.

Avantageusement, une valeur du diamètre Ø90 de l'épaulement 90 est strictement supérieure à une valeur du diamètre Ø57 de la surface de frottement 57 du tambour 49.

Ainsi, le logement 56 du tambour 49 est débouchant au niveau de l'extrémité du tambour 49 où est ménagée l'épaulement 90 et, préférentiellement, aux deux extrémités du logement 56 du tambour 49, c'est-à-dire que le logement 56 du tambour 49 n'est pas refermé partiellement par un rebord s'étendant vers l'axe de rotation X.

De cette manière, l'usinage de la surface de frottement 57 du tambour 49 est plus simple à mettre en oeuvre, pour garantir un état de surface souhaité pour cette surface de frottement 57, tout en minimisant le coût d'obtention du tambour 49.

A titre d'exemple nullement limitatif, la valeur du diamètre Ø90 de l'épaulement 90 est de l'ordre de vingt-cinq millimètres, notamment lorsque le diamètre extérieur Ø17 du carter 17 présente une valeur de quarante millimètres.

Avantageusement, l'épaulement 90 du tambour 49 constitue une butée axiale du porte-satellites 66 du deuxième étage de réduction 38 par rapport au tambour 49, en particulier suivant la direction de l'axe de rotation X, en garantissant, autrement dit de sorte à garantir, un jeu de fonctionnement J, autrement dit un écartement, entre le capot 52 et le porte-satellites 66 du deuxième étage de réduction 38.

Ainsi, ce jeu de fonctionnement J entre le capot 52 et le porte-satellites 66 du deuxième étage de réduction 38 permet de réduire le bruit de fonctionnement du réducteur 19.

Cette mise en position du porte-satellites 66 du deuxième étage de réduction 38 par rapport au tambour 49 au moyen de l'épaulement 90 du tambour 49 permet également d'améliorer le rendement du réducteur 19.

Grâce à la présente invention, cette construction de l'actionneur électromécanique, où le frein à ressort est équipé du coussinet monté à l'intérieur du premier alésage de l'organe d'entrée et à l'intérieur du deuxième alésage de l'organe de sortie, permet, lors de l'assemblage du réducteur avec le frein à ressort, de centrer l'organe de sortie par rapport à l'organe d'entrée à l'intérieur du frein à ressort, même lorsque l'arbre de centrage n'est pas inséré dans le premier alésage de l'organe d'entrée, dans l'alésage du coussinet, dans le premier alésage de l'organe de sortie et dans l'alésage du pignon solaire de l'étage de réduction du réducteur.

De nombreuses modifications peuvent être apportées aux exemples de réalisation décrits précédemment sans sortir du cadre de l'invention défini par les revendications.

En variante, non représentée, le frein à ressort 25 est configuré pour être disposé, autrement dit est disposé, dans la configuration assemblée de l'actionneur électromécanique 11, entre l'unité de contrôle 15 et le moteur électrique 16, autrement dit à l'entrée du moteur électrique 16, ou entre le réducteur 19 et l'arbre de sortie 20 de l'actionneur électromécanique 11, autrement dit à la sortie du réducteur 19, ou encore entre le moteur électrique 16 et le réducteur 19, c'est-à-dire à la sortie du moteur électrique 16. Dans le cas où le frein à ressort 25 est disposé entre le moteur électrique 16 et le réducteur 19, l'arbre d'entrée 43 du réducteur 19 est accouplé, autrement dit est configuré pour être accouplé, avec le rotor 16a du moteur électrique 16 par l'intermédiaire du dispositif de transmission de couple 31 et du frein à ressort 25, en particulier dans la configuration assemblée de l'actionneur électromécanique 11.

En outre, les modes de réalisation et variantes envisagés peuvent être combinés pour générer de nouveaux modes de réalisation de l'invention, sans sortir du cadre de l'invention défini par les revendications.

## Revendications

1. Actionneur électromécanique (11) d'un dispositif d'occultation (3),
l'actionneur électromécanique (11) comprenant au moins :
- un carter (17),
- un moteur électrique (16),
- un réducteur (19), le réducteur (19) comprenant au moins un étage de réduction (38), l'étage de réduction (38) comprenant un pignon solaire (40) et une pluralité de pignons satellites (63), le pignon solaire (40) comprenant au moins un alésage (75),
- un frein à ressort (25), et
- un arbre de centrage (71),
le moteur électrique (16), le réducteur (19) et le frein à ressort (25) étant montés à l'intérieur du carter (17),
le frein à ressort (25) comprenant au moins :
- un ressort hélicoïdal (48),
- un tambour (49), le tambour (49) comprenant une surface de frottement (57), la surface de frottement (57) étant configurée pour coopérer avec au moins une spire du ressort hélicoïdal (48),
- un organe d'entrée (50), l'organe d'entrée (50) comprenant au moins un premier alésage (72), et
- un organe de sortie (51), l'organe de sortie (51) comprenant un premier alésage (73),
l'arbre de centrage (71) étant monté à l'intérieur du premier alésage (73) de l'organe de sortie (51) et de l'alésage (75) du pignon solaire (40),
**caractérisé**
**en ce que** l'organe de sortie (51) comprend au moins un deuxième alésage (74),
**en ce que** le frein à ressort (25) comprend, en outre, un coussinet (76), le coussinet (76) comprenant au moins un alésage (77), l'arbre de centrage (71) étant monté à l'intérieur de l'alésage (77) du coussinet (76),
**en ce que** le coussinet (76) est monté à l'intérieur du premier alésage (72) de l'organe d'entrée (50) avec un ajustement serré,
et **en ce que** le coussinet (76) est monté à l'intérieur du deuxième alésage (74) de l'organe de sortie (51) avec un ajustement libre.

2. Actionneur électromécanique (11) d'un dispositif d'occultation (3) selon la revendication 1, **caractérisé**
**en ce que** le tambour (49) comprend un logement (56), le logement (56) étant de forme cylindrique,
**en ce que** la surface de frottement (57) est une surface interne du tambour (49) délimitant radialement le logement (56),
et **en ce que** la surface de frottement (57) du tambour (49) présente un diamètre (057) inférieur ou égal à quarante-cinq millimètres.

3. Actionneur électromécanique (11) d'un dispositif d'occultation (3) selon la revendication 1 ou selon la revendication 2, **caractérisé**
**en ce que** l'étage de réduction (38) comprend, en outre, un porte satellites (66), le porte-satellites (66) comprenant au moins un alésage (78),
**en ce que** le réducteur (19) comprend, en outre, un autre étage de réduction (39), l'autre étage de réduction (39) comprenant un autre pignon solaire (40), une pluralité d'autres pignons satellites (63) et un autre porte-satellites (66), l'autre pignon solaire (40) comprenant au moins un alésage (75), l'autre porte-satellites (66) comprenant au moins un alésage (78),
et **en ce que** l'arbre de centrage (71) est monté à l'intérieur de l'alésage (78) du porte-satellites (66) de l'étage de réduction (38), de l'alésage (75) de l'autre pignon solaire (40) de l'autre étage de réduction (39) et de l'alésage (78) de l'autre porte-satellites (66) de l'autre étage de réduction (39).

4. Actionneur électromécanique (11) d'un dispositif d'occultation (3) selon la revendication 3, **caractérisé**
**en ce que** l'organe d'entrée (50) comprend, en outre, un deuxième alésage (79),
**en ce que** l'arbre de centrage (71) est monté avec un ajustement libre à l'intérieur du deuxième alésage (79) de l'organe d'entrée (50),
**en ce que** l'arbre de centrage (71) est monté avec un ajustement serré à l'intérieur de l'alésage (78) de l'autre porte-satellites (66) de l'autre étage de réduction (39),
et **en ce que** l'arbre de centrage (71) est monté avec un ajustement libre à l'intérieur du premier alésage (73) de l'organe de sortie (51).

5. Actionneur électromécanique (11) d'un dispositif d'occultation (3) selon la revendication 3 ou selon la revendication 4, **caractérisé**
**en ce que** le porte-satellites (66) de l'étage de réduction (38) comprend une interface d'accouplement (89),
**en ce que** l'organe de sortie (51) comprend une interface d'accouplement (80),
**en ce que** l'interface d'accouplement (89) du porte-satellites (66) de l'étage de réduction (38) et l'interface d'accouplement (80) de l'organe de sortie (51) sont identiques,
**en ce que** le pignon solaire (40) de l'étage de réduction (38) comprend une première denture (42),
**en ce que** l'autre pignon solaire (40) de l'autre étage de réduction (39) comprend une première denture (42),
et **en ce que** la première denture (42) du pignon solaire (40) de l'étage de réduction (38) et la première denture (42) de l'autre pignon solaire (40) de l'autre étage de réduction (39) sont identiques.

6. Actionneur électromécanique (11) d'un dispositif d'occultation (3) selon l'une quelconque des revendications 3 à 5, **caractérisé**
**en ce que** le tambour (49) comprend un épaulement (90),
et **en ce que** le porte-satellites (66) de l'étage de réduction (38) est configuré pour être en appui contre l'épaulement (90) du tambour (49).

7. Actionneur électromécanique (11) d'un dispositif d'occultation (3) selon la revendication 6, **caractérisé**
**en ce que** le frein à ressort (25) comprend, en outre, un capot (52),
et **en ce que** l'épaulement (90) du tambour (49) constitue une butée axiale du porte-satellites (66) de l'étage de réduction (38) par rapport au tambour (49), en garantissant un jeu de fonctionnement (J) entre le capot (52) et le porte-satellites (66) de l'étage de réduction (38).

8. Actionneur électromécanique (11) d'un dispositif d'occultation (3) selon l'une quelconque des revendications 1 à 7, **caractérisé en ce que** le tambour (49) est réalisé en acier ou dans une matière plastique.

9. Actionneur électromécanique (11) d'un dispositif d'occultation (3) selon l'une quelconque des revendications 1 à 8, **caractérisé en ce que** le porte-satellites (66) de l'étage de réduction (38) est réalisé en matière plastique.

10. Dispositif d'occultation (3),
le dispositif d'occultation (3) comprenant au moins :
- un écran (2), et
- un actionneur électromécanique (11), l'écran (2) étant entraîné en déplacement par l'actionneur électromécanique (11),
**caractérisé en ce que** l'actionneur électromécanique (11) est conforme à l'une quelconque des revendications 1 à 9.

## Patentansprüche

1. Elektromechanischer Aktuator (11) einer Abdeckvorrichtung (3), der elektromechanische Aktuator (11) mindestens umfassend:
- ein Gehäuse (17),
- einen Elektromotor (16),
- ein Untersetzungsgetriebe (19), wobei das Untersetzungsgetriebe (19) mindestens eine Reduktionsstufe (38) umfasst, die Reduktionsstufe (38) umfassend ein Sonnenrad (40) und eine Vielzahl von Planetenrädern (63), das Sonnenrad (40) umfassend mindestens eine Bohrung (75),
- eine Federbremse (25), und
- eine Zentrierwelle (71),
wobei der Elektromotor (16), das Getriebe (19) und die Federbremse (25) im Inneren des Gehäuses (17) montiert sind,
die Federbremse (25) mindestens umfassend:
- eine Schraubenfeder (48),
- eine Trommel (49), die Trommel (49) umfassend eine Reibungsfläche (57), wobei die Reibungsfläche (57) konfiguriert ist, um mit mindestens einer Windung der Schraubenfeder (48) zusammenzuwirken,
- ein Eingangselement (50), das Eingangselement (50) mindestens umfassend eine erste Bohrung (72), und
- ein Ausgangselement (51), das Ausgangselement (51) umfassend eine erste Bohrung (73),
wobei die Zentrierwelle (71) innerhalb der ersten Bohrung (73) des Ausgangselements (51) und der Bohrung (75) des Sonnenrads (40) montiert ist, **dadurch gekennzeichnet dass** das Ausgangselement (51) mindestens eine zweite Bohrung (74) umfasst, dass die Federbremse (25) ferner eine Lagerbuchse (76) umfasst, die Lagerbuchse (76) umfassend mindestens eine Bohrung (77), wobei die Zentrierwelle (71) innerhalb der Bohrung (77) der Lagerbuchse (76) montiert ist,
dass die Lagerbuchse (76) innerhalb der ersten Bohrung (72) des Eingangselements (50) mit einem Presssitz montiert ist,
und dass die Lagerbuchse (76) innerhalb der zweiten Bohrung (74) des Ausgangselements (51) mit einer losen Passung montiert ist.

2. Elektromechanischer Aktuator (11) einer Abdeckvorrichtung (3) nach Anspruch 1, **dadurch gekennzeichnet,**
**dass** die Trommel (49) eine Aufnahme (56) umfasst, wobei die Aufnahme (56) von zylindrischer Form ist,
**dass** die Reibungsfläche (57) eine Innenfläche der Trommel (49) ist, die die Aufnahme (56) radial begrenzt,
und **dass** die Reibungsfläche (57) der Trommel (49) einen Durchmesser (057) kleiner oder gleich fünfundvierzig Millimetern aufweist.

3. Elektromechanischer Aktuator (11) einer Abdeckvorrichtung (3) nach Anspruch 1 oder nach Anspruch 2, **dadurch gekennzeichnet,**
**dass** die Reduzierstufe (38) ferner einen Satellitenträger (66) umfasst, der Satellitenträger (66) umfassend mindestens eine Bohrung (78),
**dass** das Untersetzungsgetriebe (19) ferner eine weitere Reduzierstufe (39) umfasst, die weitere Reduzierstufe (39) umfassend ein weiteres Sonnenrad (40), eine Vielzahl von weiteren Planetenrädern (63) und einen weiteren Planetenträger (66), das weitere Sonnenrad (40) umfassend mindestens eine Bohrung (75), der weitere Planetenträger (66) umfassend mindestens eine Bohrung (78),
und **dass** die Zentrierwelle (71) innerhalb der Bohrung (78) des Planetenträgers (66) der Reduzierstufe (38), der Bohrung (75) des weiteren Sonnenrads (40) der weiteren Reduzierstufe (39) und der Bohrung (78) des weiteren Planetenträgers (66) der weiteren Reduzierstufe (39) montiert ist.

4. Elektromechanischer Aktuator (11) einer Abdeckvorrichtung (3) nach Anspruch 3, **dadurch gekennzeichnet,**
**dass** das Eingangselement (50) ferner eine zweite Bohrung (79) umfasst,
**dass** die Zentrierwelle (71) mit einer freien Passung innerhalb der zweiten Bohrung (79) des Eingangselements (50) montiert ist,
**dass** die Zentrierwelle (71) mit einem Presssitz innerhalb der Bohrung (78) des weiteren Planetenträgers (66) der weiteren Reduzierstufe (39) montiert ist,
und **dass** die Zentrierwelle (71) mit einer freien Passung innerhalb der ersten Bohrung (73) des Ausgangselements (51) montiert ist.

5. Elektromechanischer Aktuator (11) einer Abdeckvorrichtung (3) nach Anspruch 3 oder nach Anspruch 4, **dadurch gekennzeichnet,**
**dass** der Planetenträger (66) der Reduzierstufe (38) eine Kupplungsschnittstelle (89) umfasst,
**dass** das Ausgangselement (51) eine Kupplungsschnittstelle (80) umfasst,
**dass** die Kupplungsschnittstelle (89) des Planetenträgers (66) der Reduzierstufe (38) und die Kupplungsschnittstelle (80) des Ausgangselements (51) identisch sind,
**dass** das Sonnenrad (40) der Reduzierstufe (38) eine erste Verzahnung (42) umfasst, dass das weitere Sonnenrad (40) der weiteren Reduzierstufe (39) eine erste Verzahnung (42) umfasst,
und **dass** die erste Verzahnung (42) des Sonnenrads (40) der Reduzierstufe (38) und die erste Verzahnung (42) des weiteren Sonnenrads (40) der weiteren Reduzierstufe (39) identisch sind.

6. Elektromechanischer Aktuator (11) einer Abdeckvorrichtung (3) nach einem der Ansprüche 3 bis 5, **dadurch gekennzeichnet,**
**dass** die Trommel (49) eine Schulter (90) umfasst,
und **dass** der Planetenträger (66) der Reduzierstufe (38) konfiguriert ist, um an der Schulter (90) der Trommel (49) anzuliegen.

7. Elektromechanischer Aktuator (11) einer Abdeckvorrichtung (3) nach Anspruch 6, **dadurch gekennzeichnet,**
**dass** die Federbremse (25) zusätzlich eine Haube (52) umfasst,
und **dass** die Schulter (90) der Trommel (49) einen axialen Anschlag des Planetenträgers (66) der Reduzierstufe (38) in Bezug auf die Trommel (49) bildet, und ein betriebliches Spiel (J) zwischen der Haube (52) und dem Planetenträger (66) der Reduzierstufe (38) gewährleistet.

8. Elektromechanischer Aktuator (11) einer Abdeckvorrichtung (3) nach einem der Ansprüche 1 bis 7, **dadurch gekennzeichnet, dass** die Trommel (49) aus Stahl oder einem Kunststoffmaterial gefertigt ist.

9. Elektromechanischer Aktuator (11) einer Abdeckvorrichtung (3) nach einem der Ansprüche 1 bis 8, **dadurch gekennzeichnet, dass** der Planetenträger (66) der Reduzierstufe (38) aus Kunststoff gefertigt ist.

10. Abdeckvorrichtung (3),
die Abdeckvorrichtung (3) mindestens umfassend:
- eine Blende (2), und
- einen elektromechanischen Aktuator (11), wobei die Blende (2) durch den elektromechanischen Aktuator (11) in Bewegung versetzt wird,
**dadurch gekennzeichnet, dass** der elektromechanische Aktuator (11) nach einem der Ansprüche 1 bis 9 ist.

## Claims

1. An electromechanical actuator (11) of a shading device (3),
the electromechanical actuator (11) comprising at least:
- a casing (17),
- an electric motor (16),
- a gearbox (19), the gearbox (19) comprising at least one reduction stage (38), the reduction stage (38) comprising a sun gear (40) and a plurality of planet gears (63), the sun gear (40) comprising at least one bore (75),
- a spring-applied brake (25), and
- a centring shaft (71),
the electric motor (16), the gearbox (19) and the spring-applied brake (25) being mounted within the casing (17),
the spring-applied brake (25) comprising at least:
- a coil spring (48),
- a drum (49), the drum (49) comprising a friction surface (57), the friction surface (57) being configured to cooperate with at least one turn of the coil spring (48),
- an input member (50), the input member (50) comprising at least a first bore (72), and
- an output member (51), the output member (51) comprising a first bore (73),
the centring shaft (71) being mounted inside the first bore (73) of the output member (51) and the bore (75) of the sun gear (40),
**characterized**
**in that** the output member (51) comprises at least one second bore (74),
**in that** the spring-applied brake (25) further comprises a bushing (76), the bushing (76) comprising at least one bore (77), the centring shaft (71) being mounted inside the bore (77) of the bushing (76),
**in that** the bushing (76) is mounted inside the first bore (72) of the input member (50) with an interference fit,
and **in that** the bushing (76) is mounted inside the second bore (74) of the output member (51) with a loose fit.

2. The electromechanical actuator (11) of a shading device (3) according to claim 1, **characterized**
**in that** the drum (49) comprises a housing (56), the housing (56) being cylindrical in shape,
**in that** the friction surface (57) is an internal surface of the drum (49) radially delimiting the housing (56),
and **in that** the friction surface (57) of the drum (49) has a diameter (Ø57) less than or equal to forty-five millimetres.

3. The electromechanical actuator (11) of a shading device (3) according to claim 1 or according to claim 2, **characterized**
**in that** the reduction stage (38) further comprises a planet carrier (66), the planet carrier (66) comprising at least one bore (78),
**in that** the gearbox (19) further comprises a further reduction stage (39), the further reduction stage (39) comprising a further sun gear (40), a plurality of further planet gears (63) and a further planet carrier (66), the further sun gear (40) comprising at least one bore (75), the further planet carrier (66) comprising at least one bore (78), and in that the centring shaft (71) is mounted inside the bore (78) of the planet carrier (66) of the reduction stage (38), the bore (75) of the further sun gear (40) of the further reduction stage (39) and the bore (78) of the further planet carrier (66) of the further reduction stage (39).

4. The electromechanical actuator (11) of a shading device (3) according to claim 3, **characterized**
**in that** the input member (50) further comprises a second bore (79),
**in that** the centring shaft (71) is mounted with a loose fit inside the second bore (79) of the input member (50),
**in that** the centring shaft (71) is mounted with an interference fit inside the bore (78) of the further planet carrier (66) of the further reduction stage (39),
and **in that** the centring shaft (71) is mounted with a loose fit inside the first bore (73) of the output member (51).

5. The electromechanical actuator (11) of a shading device (3) according to claim 3 or according to claim 4, **characterized**
**in that** the planet carrier (66) of the reduction stage (38) comprises a coupling interface (89),
**in that** the output member (51) comprises a coupling interface (80),
**in that** the coupling interface (89) of the planet carrier (66) of the reduction stage (38) and the coupling interface (80) of the output member (51) are identical,
**in that** the sun gear (40) of the reduction stage (38) comprises a first set of teeth (42), in that the further sun gear (40) of the further reduction stage (39) comprises a first set of teeth (42),
and **in that** the first set of teeth (42) of the sun gear (40) of the reduction stage (38) and the first set of teeth (42) of the further sun gear (40) of the further reduction stage (39) are identical.

6. The electromechanical actuator (11) of a shading device (3) according to any one of claims 3 to 5, **characterized**
**in that** the drum (49) comprises a shoulder (90),
and **in that** the planet carrier (66) of the reduction stage (38) is configured to bear against the shoulder (90) of the drum (49).

7. The electromechanical actuator (11) of a shading device (3) according to claim 6, **characterized**
**in that** the spring-applied brake (25) further comprises a cover (52),
and **in that** the drum (49) of the shoulder (90) constitutes an axial limit stop of the planet carrier (66) of the reduction stage (38) with respect to the drum (49), ensuring an operating play (J) between the cover (52) and the planet carrier (66) of the reduction stage (38).

8. The electromechanical actuator (11) of a shading device (3) according to any one of claims 1 to 7, **characterized in that** the drum (49) is made of steel or plastic.

9. The electromechanical actuator (11) of a shading device (3) according to any one of claims 1 to 8, **characterized in that** the planet carrier (66) of the reduction stage (38) is made of plastic.

10. A shading device (3),
the shading device (3) comprising at least:
- a screen (2), and
- an electromechanical actuator (11), the screen (2) being moved by the electromechanical actuator (11),
**characterized in that** the electromechanical actuator (11) is according to any one of claims 1 to 9.
